# EUROPÄISCHE PATENTSCHRIFT

(11) **EP 3 008 109 B1**
(45) Veröffentlichungstag und Bekanntmachung des Hinweises auf die Patenterteilung: **09.12.2026**
(21) Anmeldenummer: 14730137.8
(22) Anmeldetag: 11.06.2014
(51) Int. Cl.: C08G 69/28

(54) **VERFAHREN ZUR KONTINUIERLICHEN HERSTELLUNG VON POLYAMID-OLIGOMEREN UND ZUR HERSTELLUNG VON TEILKRISTALLINEN ODER AMORPHEN, THERMOPLASTISCH VERARBEITBAREN POLYAMIDEN**
METHOD FOR THE CONTINUOUS PRODUCTION OF POLYAMIDE OLIGOMERS AND FOR THE PREPARATION OF PARTIALLY CRYSTALLINE OR AMORPHOUS, THERMOPLASTICALLY PROCESSABLE POLYAMIDES
PROCÉDÉ DE FABRICATION EN CONTINU D'OLIGOMÈRES DE POLYAMIDE ET DE FABRICATION DE POLYAMIDES PARTIELLEMENT CRISTALLINS OU AMORPHES POUVANT ÊTRE TRAITÉS PAR THERMOPLASTIE

(30) Priorität: 12.06.2013 EP 13171652
(43) Veröffentlichungstag der Anmeldung: 20.04.2016
(73) Patentinhaber: BASF SE, 67056 Ludwigshafen am Rhein (DE)
(72) Erfinder: CLAUSS, Joachim, 64297 Darmstadt (DE); SCHWIEGK, Stefan, 67433 Neustadt (DE); KORY, Gad, 69251 Gaiberg (DE); SCHMIDT, Christian, 67061 Ludwigshafen (DE); WILMS, Axel, 67227 Frankenthal (DE); RICHTER, Florian, 68159 Mannheim (DE); ZHU, Ning, 68163 Mannheim (DE); BIEDASEK, Silke, 67061 Ludwigshafen (DE); QUEIROZ DA FONSECA, Isa Alexandra, 67059 Ludwigshafen (DE); SACK, Heinrich, 67454Haßloch (DE); SCHNELLER, Arnold, 64342 Seeheim-Jugenheim (DE); STAMMER, Achim, 67251 Freinsheim (DE); RAUSCHENBERGER, Volker, 67304 Eisenberg (DE)
(74) Vertreter: BASF IP Association
(86) Internationale Anmeldenummer: PCT/EP2014/062103
(87) Internationale Veröffentlichungsnummer: WO 2014/198757

(56) Entgegenhaltungen:
- EP-B1- 0 693 515
- WO-A2-2004/055084
- DE-C1- 4 142 978

## Beschreibung

### HINTERGRUND DER ERFINDUNG

Die vorliegende Erfindung betrifft ein Verfahren zur kontinuierlichen Herstellung von Polyamid-Oligomeren und ein in diesem Verfahren hergestelltes Polyamid-Oligomer. Weiterhin betrifft die Erfindung ein Verfahren zur Herstellung von teilkristallinen oder amorphen, thermoplastisch verarbeitbaren Polyamiden aus dem nach dem erfindungsgemäßen Verfahren hergestellten Polyamid-Oligomer.

### STAND DER TECHNIK

Teilaromatische Polyamide mit Terephthalamid- bzw. Isophthalamid-Einheiten sind seit langem bekannt und vor allem als Copolyamide im Markt etabliert. Die Herstellung von teilkristallinen oder amorphen teilaromatischen Polyamiden stellt dagegen immer noch eine technische Herausforderung dar, unter anderem da der Wasserhaushalt der Reaktionsmischung und die damit verbundene Temperatur- und Druckführung als Funktion der Zeit und die stöchiometrischen Anforderungen nicht trivial sind. Damit verbunden sind vergleichsweise hohe und zum Teil extreme Anforderungen an das Verfahren und die hierfür nötige Ausrüstung bzw. Anlagen.

Bei teilkristallinen teilaromatischen Polyamiden kommt der Temperaturführung eine besondere Bedeutung zu, da bei den oft notwendigen, relativ hohen Temperaturen einerseits Nebenreaktionen auftreten und andererseits die Reaktionsmischung oder Teile derselben dennoch als Feststoff anfallen können. Der Schmelz- oder Erstarrungspunkt einer Reaktionsmischung variiert zudem als Funktion des Umsetzungsgrades und kann beispielsweise bei Blockbildung im Oligomerenstadium über dem eines statistisch verteilten, höhermolekularen Polyamids liegen. Wasser oder andere kleine Moleküle können hierbei als Lösemittel eingreifen oder als Schmelzpunktserniedriger agieren. Nebenreaktionen können unter anderem zu Verzweigungen und/oder Vernetzungen und/oder stöchiometrisch relevanten Änderungen führen.

Bei amorphen teilaromatischen Polyamiden stellt sich die Situation günstiger dar, da die Reaktionsmischungen erst bei deutlich geringeren Temperaturen als üblicherweise zur Reaktionsführung verwendet werden, fest werden und damit an Verfahren und Ausrüstung praktisch geringere Anforderungen gestellt werden.

Die Herstellung von teilkristallinen oder amorphen teilaromatischen Polyamiden erfolgt in der Regel über mehrere Verfahrensschritte. Im ersten Schritt werden üblicherweise die eingesetzten Monomere (Diamine, Dicarbonsäuren oder deren Derivate, Aminocarbonsäuren oder deren Lactamderivate) in Anwesenheit von Wasser zu einer fluiden Salzlösung oder Dispersion umgesetzt, deren Zusammensetzung nahe oder gleich einer stöchiometrischen Äquivalenz von Amino- und Carboxylgruppen entspricht. Dieser Löse- oder Neutralisationsschritt erfolgt in der Regel chargenweise in einem konventionellen Rührkessel. Dies hat den Vorteil, dass die Monomermischung durch die Anwendung einfacher Säure-Base-Titrationsmethoden auf ihre Zusammensetzung hin kontrolliert und gegebenenfalls durch Zugabe des fehlenden Amin- oder Säureanteils auf das jeweils vorgegebene Verhältnis der Amin- und Carboxylgruppen eingestellt werden kann.

Auf den Löse- oder Neutralisationsschritt kann die Herstellung eines Vorkondensats bzw. Oligomers erfolgen, bevor gegebenenfalls in nachgeschalteten Reaktionsschritten höhermolekulare teilaromatische Polyamide erhalten werden.

So offenbart die EP 0 693 515 B1 ein Verfahren zur Herstellung von Vorkondensaten teilaromatischer Polyamide bzw. Copolyamide, das von den grundsätzlichen Vorteilen eines Chargenprozesses Gebrauch macht. Die chargenweise (bzw. batchweise) Durchführung des Verfahrens wird dabei als kritisch für den Erfolg des Verfahrens angesehen. Es wird ein mehrstufiger Chargenprozess beschieben, der eine Salzbildungsphase in einem rühr- und inertisierbaren Autoklaven, eine Reaktionsphase in einem Autoklaven, der mit einem Wasserdampferzeuger verbunden ist, aber nicht notwendigerweise der Gleiche wie der der ersten Phase sein muss, eine für mindestens 10 Minuten aufrechtzuerhaltende stationäre Phase, eine Überführung der Vorkondensate in eine nachfolgende Prozessstufe, wobei bei einem gegebenen unteren Wasserdampfdruck die Temperatur des Reaktorinhaltes unterhalb des Schmelzpunktes bleibt bzw. 265 °C nicht überschreiten darf und eine Austragsphase umfasst. Das so gewonnene Vorkondensat kann schmelzeflüssig oder fest einer Endreaktionsvorrichtung zugeführt werden. Unter einem Druck von mindestens 1,6 MPa stehende Vorkondensatchargen teilkristalliner Polyamide oder Copolyamide mit einem Schmelzpunkt von 280 °C und darüber können durch Einsprühen in einen inertisierten Zyklon oder Sprühturm oder ein vergleichbares Aggregat in Form fester Partikel gewonnen, gegebenenfalls getrocknet und/oder zerkleinert und nach Wiederaufschmelzen mit einem geeigneten Dosier- und Förderaggregat in die Endreaktionsvorrichtung eingespeist werden. Lediglich bezüglich dieser nicht näher beschriebenen Endreaktionsvorrichtung wird erwähnt, dass diese auch kontinuierlich arbeiten kann, ohne dass dies genauer ausgeführt wird.

Die DE 41 42 978 beschreibt ein Mehrschicht-Verbundsystem für Mehrweg-Verpackungen aus mindestens einer Copolyamid-Schutzschicht und mindestens einer Copolyamid-Barriereschicht, wobei die Herstellung der eingesetzten Copolyamide diskontinuierlich erfolgt.

Die WO 2004/055084 beschreibt teilkristalline, thermoplastisch verarbeitbare, teilaromatische Copolyamide, herstellbar durch Kondensation von mindestens den folgenden Monomeren bzw. dessen Vorkondensaten: a) Terephthalsäure b) wenigstens einer dimerisierten Fettsäure mit bis zu 44 Kohlenstoffatomen und c) wenigstens eines aliphatischen Diamins der Formel H₂N-(CH₂)_{X}-NH₂, worin x eine ganze Zahl von 4-18 bedeutet. Ein kontinuierliches Verfahren zur Herstellung dieser Copolyamide ist nicht beschrieben.

Chargenprozesse haben generell den Vorteil, dass Produktwechsel sehr rasch und ohne größeren Aufwand vorgenommen werden können. Im Gegensatz zu vollkontinuierlichen Verfahren haben sie zwar den Vorteil, dass sie ein hohes Maß an Flexibilität erlauben, aber sie unterliegen Beschränkungen in Bezug auf die erreichbaren mittleren Molmassen. Wegen der meist sehr hohen strukturbedingten Schmelzviskositäten solcher teilaromatischer Polyamide muss ihre Polykondensation in einem sehr frühen Stadium abgebrochen werden, um die Schmelze aus einem Batch-Autoklaven austragen und aufarbeiten zu können.

Die Begrenzung der mittleren Molmasse dieser teilaromatischen Polyamide auf vergleichsweise niedrige Werte wirkt sich dabei ungünstig auf ihre mechanischen, verarbeitungstechnischen und anderen anwendungsrelevanten Eigenschaften aus.

Chargenprozesse weisen intrinsisch den Nachteil auf, dass An- und Abfahrvorgänge, Ein- und Austragen von Materialien, keinen anlagentechnischen Gleichgewichtszustand darstellen und daher eine gleichbleibende Produktqualität nur schwierig zu gewährleisten ist. Zudem haben Anlagen für Chargenprozesse den Nachteil, dass sie beim Skalieren für höhere Durchsätze eine geringe Kostendegression zeigen. Weiterhin zeigt sich erfahrungsgemäß der Nachteil, dass Chargenprozesse mit einer relativ hohen Mannschaftsstärke betrieben werden müssen und sie so bezüglich ihrer Wirtschaftlichkeit oft schwer mit kontinuierlichen Prozessen konkurrieren können.

Mittlerweile gab es zahlreiche Versuche, diese Schwierigkeiten zu umgehen. Bekannte Vorschläge umfassen die Anwendung zweistufiger Verfahren mit einer chargenweise oder kontinuierlich durchgeführten Vorkondensat- oder Prepolymer-Herstellung und einer Endreaktionsstufe zum fertigen Polymer hinaus.

Die EP 0 410 649 und die US 4,963,646 beschreiben Verfahren, die einige der genannten Probleme umgehen. Diese Verfahren sind aber insofern schwierig realisierbar als in einen Extruder zwei Komponenten in exakt einzuhaltenden, durch die Stöchiometrie bestimmten Mengenverhältnissen, zugeführt werden müssen und dieser neben der homogenen Vermischung beider Komponenten auch deren Reaktion mit Entgasung übernehmen muss. Dies ist für wirtschaftlich vertretbare, relativ kurze Verweilzeiten in konventionellen Extrudern praktisch nicht zu erreichen.

Die US 4,831,108 A und die US 5,098,940 A offenbaren jeweils ein aufwändiges, kontinuierliches Verfahren mit Rohrreaktor(en), einer "Dispersionsphase" von in Dampf dispergiertem Polymer und mit Extruder(n).

Der Erfindung liegt daher die Aufgabe zugrunde, ein Verfahren zur Herstellung von Vorkondensaten bzw. Oligomeren teilkristalliner oder amorpher, thermoplastisch verarbeitbarer, teilaromatischer Polyamide bereitzustellen, das nicht die Nachteile eines Chargenprozesses aufweist. Der Erfindung liegt weiterhin die Aufgabe zugrunde, ein Verfahren zur Überführung der Oligomere in höhermolekulare Polyamide, die zur Herstellung von thermoplastisch verarbeitbaren Formmassen geeignet sind, bereitzustellen.

Überraschenderweise wurde nun gefunden, dass diese Aufgabe gelöst wird, wenn in einem kontinuierlichen Verfahren eine wässrige Lösung polyamidbildender Monomere über eine Löse- oder Lagerungstemperatur hinaus erwärmt wird, wobei die Verweilzeit der Monomersalzlösung im Oligomerisationsreaktor so begrenzt und der Druck oder der Partialdampfdruck des Wassers so eingestellt wird, dass ein Umsatz von Monomeren zu Polyamid-Oligomeren einen Maximalwert nicht überschreitet und/oder die entstehenden Polyamid-Oligomeren nicht als Feststoff phasenseparieren oder spontan kristallisieren.

### ZUSAMMENFASSUNG DER ERFINDUNG

Gegenstand der Erfindung ist daher ein Verfahren zur kontinuierlichen Herstellung von Polyamid-Oligomeren. Dieses umfasst eine kontinuierliche Förderung einer wässrigen Lösung polyamidbildender Monomere aus einem Vorratsgefäß in einen Oligomerisierungsreaktor, ein Erwärmen der wässrigen Lösung über eine Löse- oder Lagerungstemperatur hinaus, wobei die Verweilzeit der Monomerenlösung im Oligomerisationsreaktor so begrenzt und der Druck oder der Partialdampfdruck des Wassers so eingestellt wird, dass ein Umsatz von Monomeren zu Polyamid-Oligomeren einen Maximalwert nicht überschreitet und/oder die entstehenden Polyamid-Oligomeren nicht als Feststoff phasenseparieren oder spontan kristallisieren und ein kontinuierliches Austragen der Polyamid-Oligomeren aus dem Oligomerisationsreaktor. Es ermöglicht die kontinuierliche Herstellung von Polyamid-Oligomeren, so dass die typischen Nachteile eines Batch-Verfahrens, wie Limitierung der Ansatzgröße, Zeitverlust durch Befüllung, Entleerung und Reinigung des Reaktionsbehälters und Neigung zur Bildung von Ablagerungen an der Innenwand des Reaktionsbehälters, vermieden werden.

Ein Polyamid-Oligomer, das mittels dieses Verfahrens herstellbar ist, zeichnet sich durch eine hohe Qualitätskonstanz und eine enge Molmassenverteilung aus.

Ein weiterer Gegenstand der Erfindung ist ein Verfahren, in dem ausgehend von dem Polyamid-Oligomer höhermolekulare, teilkristalline oder amorphe, thermoplastisch verarbeitbare Polyamide hergestellt werden. Das Verfahren umfasst ein kontinuierliches Bereitstellen einer Mischung, die Wasser und das Polyamid-Oligomer enthält und eine Nachkondensation des Polyamid-Oligomers zu einem Polyamid.

Das teilaromatische Polyamid, das durch ein Verfahren, wie zuvor und im Folgenden definiert, erhalten wird, eignet sich vorzugsweise zur Herstellung von Elektro- und Elektronikbauteilen und für Automobil-Anwendungen im Hochtemperaturbereich.

Das aliphatische Polyamid, welches durch ein Verfahren, wie zuvor und im Folgenden definiert, erhalten wird, kann zur Herstellung von Folien, Monofilamenten, Fasern, Garnen oder textilen Flächengebilden verwendet werden.

### DETALIERTE BESCHREIBUNG DER ERINDUNG

Unter der Bezeichnung Polyamide werden im Folgenden Homo- und Copolyamide zusammengefasst. Zur Bezeichnung der Polyamide werden im Rahmen der Erfindung zum Teil fachübliche Kurzzeichen verwendet, die aus den Buchstaben PA sowie darauf folgenden Zahlen und Buchstaben bestehen. Einige dieser Kurzzeichen sind in der DIN EN ISO 1043-1 definiert. Polyamide, die sich von Aminocarbonsäuren des Typs H₂N-(CH₂)_{z}-COOH oder den entsprechenden Lactamen ableiten lassen, werden als PA Z gekennzeichnet, wobei Z die Anzahl der Kohlenstoffatome im Monomer bezeichnet. So steht z. B. PA 6 für das Polymere aus ε-Caprolactam bzw. der ε-Aminocapronsäure. Polyamide, die sich von Diaminen und Dicarbonsäuren der Typen H₂N-(CH₂)ₓ-NH₂ und HOOC-(CH₂)_{y}-COOH ableiten lassen, werden als PA xy gekennzeichnet, wobei x die Anzahl der Kohlenstoffatome im Diamin und y die Anzahl der Kohlenstoffatome in der Dicarbonsäure bezeichnet. Zur Bezeichnung von Copolyamiden werden die Komponenten in der Reihenfolge ihrer Mengenanteile, durch Schrägstriche getrennt, aufgeführt. So ist z. B. PA 66/610 das Copolyamid aus Hexamethylendiamin, Adipinsäure und Sebacinsäure. Für die erfindungsgemäß eingesetzten Monomere mit einer aromatischen oder cycloaliphatischen Gruppe werden folgende Buchstabenkürzel verwendet: T = Terephthalsäure, I = Isophthalsäure, MXDA = m-Xylylendiamin, IPDA = Isophorondiamin, PACM = 4,4'-Methylenbis(cyclohexylamin), MACM = 2,2'-Dimethyl-4,4'-methylenbis-(cyclohexylamin).

Im Folgenden umfasst der Ausdruck "C₁-C₄-Alkyl" unsubstituierte geradkettige und verzweigte C₁-C₄-Alkylgruppen. Beispiele für C₁-C₄-Alkylgruppen sind insbesondere Methyl, Ethyl, Propyl, Isopropyl, n-Butyl, Isobutyl, sec.-Butyl und tert.-Butyl (1,1-Dimethylethyl).

Bei den im Folgenden genannten aromatischen Dicarbonsäuren, aliphatischen Dicarbonsäuren, cycloaliphatischen Dicarbonsäuren und Monocarbonsäuren können die Carboxylgruppen jeweils in nicht derivatisierter Form oder in Form von Derivaten vorliegen. Bei Dicarbonsäuren kann keine, eine oder beide Carboxylgruppe(n) in Form eines Derivats vorliegen. Geeignete Derivate sind Anhydride, Ester, Säurechloride, Nitrile und Isocyanate. Bevorzugte Derivate sind Anhydride oder Ester. Anhydride von Dicarbonsäuren können in monomerer oder in polymerer Form vorliegen. Bevorzugte Ester sind Alkylester und Vinylester, besonders bevorzugt C₁-C₄-Alkylester, ganz besonders bevorzugt die Methylester oder Ethylester. Dicarbonsäuren liegen bevorzugt als Mono- oder Dialkylester, besonders bevorzugt als Mono- oder Di-C₁-C₄-alkylester, ganz besonders bevorzugt als Monomethylester, Dimethylester, Monoethylester oder Diethylester vor. Dicarbonsäuren liegen weiterhin bevorzugt als Mono- oder Divinylester vor. Dicarbonsäuren liegen weiterhin bevorzugt als gemischte Ester, besonders bevorzugt als gemischte Ester mit unterschiedlichen C₁-C₄-Alkylkomponenten, ganz besonders bevorzugt als Methylethylester, vor.

Die nach dem erfindungsgemäßen Verfahren herstellbaren Polyamide lassen sich zum einen durch die Bausteine beschreiben, in die das Polymer bei Annahme einer vollständigen Hydrolyse der Amidgruppen zerfällt. Im Folgenden wird bei der Definition der so erhaltenen Bausteine gemäß der allgemeinen Formel (I) davon ausgegangen, dass nur Amidgruppen hydrolytisch gespalten werden. Ester und Amidingruppen verbleiben unhydrolysiert. Diese Definition der Polyamide ist nicht identisch mit der im Folgenden alternativ angegebenen Definition durch die eingesetzten Monomere, da bei Letzterer durch Nebenreaktionen entstehende Strukturen nicht angemessen beschrieben werden können.

Vorzugsweise ergeben nach dem erfindungsgemäßen Verfahren herstellbare Polyamide bei ausschließlicher hydrolytischer Spaltung der Amidgruppen eine Zusammensetzung der folgenden Formel (I)

A1ₐ₁|B1_{b1}|A2ₐ₂|B2_{b2}|B3_{b3}|AXₐₓ|BY_{by}|AB_{ab}|A2B_{a2b} |AXBY_{axby} (I)

worin
- A1: Einheiten bezeichnet, die sich von unsubstituierten oder substituierten Monocarbonsäuren oder ihren Derivaten ableiten,
- A2: Einheiten bezeichnet, die sich von unsubstituierten oder substituierten Dicarbonsäuren oder ihren Derivaten ableiten,
- AX: Einheiten bezeichnet, die sich von Verbindungen mit einer Carboxylfunktionalität größer als zwei ableiten,
- B1: Einheiten bezeichnet, die sich von monofunktionellen Aminen ableiten,
- B2: Einheiten bezeichnet, die sich von Diaminen ableiten,
- B3: Einheiten bezeichnet, die sich von Triaminen herleiten,
- BY: Einheiten bezeichnet, die sich von Verbindungen mit einer Aminofunktionalität größer als drei ableiten,
- AB: Einheiten bezeichnet, die sich von Aminocarbonsäuren ableiten,
- A2B: Einheiten bezeichnet, die sich von Aminodicarbonsäuren ableiten,
- AXBY: Einheiten bezeichnet, die sich von Verbindungen mit Amino- und Carboxylgruppen ableiten, wobei die Funktionalitäten X + Y größer als 2 sind,
mit der Maßgabe, dass die Summe aller Indices a1 + b1 + a2 + b2 + b3 + ax + by + ab + a2b + axby sich zu 100 mol% addiert.

Die Zusammensetzung der Copolyamide in molekularen Grundeinheiten umfasst Mono-, Di-, oder Polycarbonsäuren, Mono-, Di-, Tri- oder Polyamine sowie gegebenenfalls bi- oder mehrfunktionelle Aminocarbonsäuren. Im Rahmen dieser Erfindung wird für molekulare Grundeinheiten, die sich von aciden Carboxylgruppen als funktionellen Gruppen ableiten, "A" und für die, die sich von basischen Aminogruppen als funktionellen Gruppen ableiten, "B" verwendet. Im Rahmen der Erfindung wird bei den Aminogruppen B nicht zwischen primären (NH₂) oder sekundären (NH) Aminen unterschieden.

Bezüglich geeigneter und bevorzugter Monocarbonsäuren, von denen sich die Einheiten A1 ableiten, wird auf die im Folgenden angegebenen Monocarbonsäuren E) Bezug genommen. Bezüglich geeigneter und bevorzugter unsubstituierter oder substituierter Dicarbonsäuren oder ihren Derivaten, von denen sich die Einheiten A2 ableiten, wird auf die im Folgenden angegebenen Dicarbonsäuren A) und C) und deren Derivate Bezug genommen. Bezüglich geeigneter und bevorzugter Verbindungen mit einer Carboxylfunktionalität größer als zwei, von denen sich die Einheiten AX ableiten, wird auf die im Folgenden angegebenen Verbindungen K) Bezug genommen. Bezüglich geeigneter und bevorzugter monofunktioneller Amine, von denen sich die Einheiten B1 ableiten, wird auf die im Folgenden angegebenen Monoamine F) Bezug genommen. Bezüglich geeigneter und bevorzugter Diamine, von denen sich die Einheiten B1 ableiten, wird auf die im Folgenden angegebenen Diamine B) und D) Bezug genommen. Bezüglich geeigneter und bevorzugter Triamine, von denen sich die Einheiten B3 ableiten, wird auf die im Folgenden angegebenen Triamine G) Bezug genommen. Bezüglich geeigneter und bevorzugter höher als dreiwertiger Amine, von denen sich die Einheiten BY ableiten, wird auf die im Folgenden angegebenen höherwertigen Amine G) Bezug genommen. Bezüglich geeigneter und bevorzugter höherer Aminocarbonsäuren, von denen sich die Einheiten AB ableiten, wird auf die im Folgenden angegebenen Aminocarbonsäuren I) und Lactame H) Bezug genommen. Bezüglich geeigneter und bevorzugter Aminodicarbonsäuren, von denen sich die Einheiten A2B ableiten, und höherwertiger Verbindungen, von denen sich die Einheiten AXBY ableiten, wird auf die im Folgenden angegebenen Verbindungen K) Bezug genommen.

Um Umsatz-, Endgruppen- und Stöchiometrie-Aspekte eines erfindungsgemäß hergestellten teilaromatischen Polyamids zu beschreiben, werden Funktionalitätskennzahlen eingeführt. Hierbei wird der molare Anteil jedes Fragmentes mit den jeweiligen zu bilanzierenden Funktionalitäten gewichtet. Definitionsgemäß ergibt sich die Säurekennzahl n_{funct.A} zu a1 + 2 a2 + F_{ax.ax} ax + ab + 2 a2b + F_{ax.axby} axby = n_{funct.A} und die Aminkennzahl n_{funct.B} zu b1 + 2 b2 + 3 b3 + F_{by.by} by + ab + a2b + F_{by.axby} axby = n_{funcl.B}, wobei für AX, BY und AXBY, die ja selbst wieder eine Mischung unterschiedlicher Spezies sein können, jeweils die mittleren Funktionalitäten F der jeweilig relevanten Gruppen als Vorfaktoren eingesetzt werden, mit ${F}_{ax . ax} = \frac{{\sum }_{j} {n}_{AX . j} {f}_{AX . j}}{{\sum }_{j} {n}_{AX . j}} , {F}_{ax . axby} = \frac{{\sum }_{j} {n}_{AXBY . j} {f}_{AX . AXBY . j}}{{\sum }_{j} {n}_{AXBY . j}} , {F}_{by . by} = \frac{{\sum }_{j} {n}_{BY . j} {f}_{BY . j}}{{\sum }_{j} {n}_{BY . j}} , {F}_{by . axby} = \frac{{\sum }_{j} {n}_{AXBY . j} {f}_{BY . AXBY . j}}{{\sum }_{j} {n}_{AXBY . j}} .$ n_{AX}, n_{BY} und n_{AXBY} stehen für den molaren Anteil des jeweiligen Fragmentes, j ist die Laufvariable, die die einzelnen Fragmente durchnummeriert und ganzzahlig von 1 bis zur Zahl der unterschiedlichen Fragmentspezies läuft, f_{AX} gibt die Carboxylgruppenfunktionalität der jeweiligen Fragmente AX, f_{BY} die Aminogruppenfunktionalität der jeweiligen Fragmente BY, f_{AX.AXBY} gibt die Carboxylgruppen- und f_{BY.AXBY} die Aminogruppenfunktionalität der jeweiligen Fragmente AXBY an. Analog lässt sich auch eine generalisierte Funktionalität f_{A+B} für jede Spezies oder auch für die molar gewichtete Mischung definieren, bei der für beliebige Spezies Amino- und Carboxylgruppen gemeinsam erfasst werden.

Im Fall eines stöchiometrischen Polykondensationsproduktes gilt dann n_{funct.A} = n_{funct.B}, und die Molenbrüche x der Carboxyl- bzw. Aminogruppen nehmen beide den Wert 0,5 an, mit ${x}_{A} = \frac{{n}_{funct . A}}{{n}_{funct . A} + {n}_{funct . B}}$ und ${x}_{B} = 1 - {x}_{A} = \frac{{n}_{funct . B}}{{n}_{funct . A} + {n}_{funct . B}}$. Die erfindungsgemäß hergestellten teilaromatischen Copolyamide können jedoch auch bei einer gewissen Abweichung von der Stöchiometrie erhalten werden. Vor allem, wenn Spezies der Funktionalitäten f_{A+B} >2 in der Mischung enthalten sind, kann es erfindungsgemäß und vorteilhaft sein, von der Stöchiometrie abzuweichen, eine Umsatzbegrenzung bei dem Molmassenaufbau vorzunehmen und/oder mono-funktionale Spezies mit f_{A+B} = 1 in gezieltem Umfang einzusetzen.

Die erfindungsgemäß hergestellten Copolyamide können in mehreren vorteilhaften Ausprägungen realisiert werden. Das heißt, dass grundsätzlich jede der oben beschriebenen molekularen Grundeinheiten keine, eine oder beliebig viele verschiedene molekulare Spezies umfassen kann. Beispielsweise kann in einem Polyamid die Disäurekomponente A2 aus einem bestimmten Anteil Terephthalsäure, einem anderen Anteil Isophthalsäure und einem weiteren Anteil Adipinsäure bestehen. Weiterhin kann beispielsweise die Monosäurekomponente A1 aus einem bestimmten Anteil Propionsäure und einem kleinen Anteil aus in einer Nebenreaktion decarboxylierter Dicarbonsäure bestehen.

Um die Zusammensetzung der erfindungsgemäß hergestellten teilaromatischen Copolyamide auch in Hinblick auf die genaue chemische Ausgestaltung zu beschreiben, wird die allgemeine Formel PA-A1ₐ₁|B1_{b1}|A2ₐ₂|B2_{b2}|B3_{b3}|AXₐₓ|BY_{by}|AB_{ab}|A2B_{a2b} |AXBY_{axby} dahingehend erweitert, dass nach der Funktionalität die jeweiligen chemischen Spezies definiert und dazugehörende hochgestellte Indices als chemische Zusammensetzungsvariablen eingeführt werden können. Diese Zusammensetzungsvariablen machen für jede der molekularen Grundeinheiten in Summe wieder 100 mol% aus und wirken als Faktoren auf die tiefgestellten Indices.

Die obige Definition wird am Beispiel eines Polymers erläutert, wobei von einer vollständigen Hydrolyse nur der Amidgruppen ausgegangen wird.

Als Fragmente werden betrachtet:
0,6 mol% Propionsäure
0,2 mol% Benzoesäure
0,0235 mol% Hex-5-en-1-amin (NH₃-eliminiertes HMD)
0,0075 mol% Dodec-11-en-1-amin (NH₃-eliminiertes DDD)
0,0075 mol% (1,5,5-Trimethylcyclohexen-1-yl)methanamin (NH₃-eliminiertes IPD)
0,0075 mol% Azepan (cycl. HMD)
0,004 mol% Azacyclotridecan (cycl. DDD)
32,13 mol% Terephthalsäure
13,77 mol% Isophthalsäure
41,4 mol% Hexan-1,6-diamin (HMD)
3,68 mol% Dodecan-1,12-diamin (DDD)
0,897 mol% 3-(Aminomethyl)-3,5,5-trimethyl-cyclohexanamin (IPD)
0,023 mol% andere Diamine
1,491 mol % N'-(6-Aminohexyl)hexan-1,6-diamin (HMD-Dimer Triamin)
0,588 mol% N'-(6-Aminohexyl)dodecan-1,12-diamin (HMD-DDD Triamin)
0,0126 mol% N'-(12-Aminododecyl)dodecan-1,12-diamin (DDD-Dimer Triamin)
0,0084 mol% andere Triamine
5,145 mol% Azepan-2-on (Capro)
0,005 mol% Amidindisäuren wie 4-[(Z)-N-(6-Aminohexyl)-C-hydroxy-carbonimidoyl]-benzoesäure (PTA-HMD Amidin)

Dem entspricht dann folgende Formel (I):

A1_{0,8}|B1_{0,05}|A2_{45,9}|B2₄₆|B3_{2,1}|AX₀|BY₀|AB_{5,145}|A2B_{0,005}|AXBY₀

bzw.

A1_{0,8}A1.1⁷⁵ A1.2²⁵|B1_{0,05} B1.1⁴⁷ B1.2¹⁵ B1.3¹⁵ B1.4¹⁵ B1.5⁸|A2_{45,9}A_{2.1}⁷⁰ A2.2³⁰|B2₄₆ B2.1⁹⁰ B2.2⁸ B2.3^{1,95} |B3_{2,1} B3.1⁷⁰ B3.2²⁸ B3.3^{0,6} |AX₀|BY₀|AB_{5,145}AB.1¹⁰⁰|A2B_{0,005} |AXBY

mit Propionsäure A1.1, Benzoesäure A1.2, Hex-5-en-1-amin B1.1, Dodec-11-en-1-amin B1.2, (1,5,5-Trimethylcyclohexen-1-yl)methanamin B1.3, Azepan B1.4, Azacyclotridecan B1.5, Terephthalsäure A2.1, Isophthalsäure A2.2, Hexan-1,6-diamin B2.1, Dodecan-1,12-diamin B2.2, 3-(Aminomethyl)-3,5,5-trimethyl-cyclohexanamin B2.3, N'-(6-Aminohexyl)hexan-1,6-diamin B3.1, N'-(6-Aminohexyl)dodecan-1,12-diamin B3.2, N'-(12-Aminododecyl)dodecan-1,12-diamin B3.3, Azepan-2-on AB.1, wobei nicht konkret definierte Spezies (wie andere Diamine, andere Triamine und Amidindisäuren) weggelassen werden und jeweils durch die Differenz zu den definitionsgemäßen Summen 100 mol% ausgewiesen werden.

Ein PA-AB₁₀₀| stellt also ein streng lineares, nicht endgruppengeregeltes Polyamid ohne Nebenreaktionen dar; es kann beispielsweise ein PA-6, ein PA-12 oder ein PA-6/12 Copolymer sein. Ein PA-AB₉₉| enthält mindestens 99 mol% streng lineare Einheiten und kann zu 1 mol% beliebige andere amidgebundene Einheiten (A1, B1, A2, B2, B3, AX, BY, AB, A2B, AXBY) enthalten. Ein PA-AB₁₀₀AB.1⁹⁹| mit AB.1 = Azacyclotridecan-2-on stellt also ein streng lineares, nicht endgruppengeregeltes Polyamid ohne Nebenreaktionen dar; es enthält mindestens 99 mol% PA-12 Einheiten und kann zu 1 mol% beliebige andere AB-Einheiten, also zum Beispiel Azepan-2-on, umfassen.

In einer Ausführungsform der Erfindung enthält das erfindungsgemäß hergestellte teilaromatische Copolyamid zum überwiegenden Anteil nur zwei Sorten von Fragmentspezies, also PA-A2ₐ₂|B2_{b2}| mit a2+b2 > 90 mol%, bevorzugt a2+b2 > 95 mol%, besonders bevorzugt a2+b2 > 98 mol%. In einer Ausführungsform der Erfindung wird zum überwiegenden Anteil nur eine Sorte A2 eingesetzt. In einer weiteren Ausführungsform der Erfindung werden zum überwiegenden Anteil nur zwei Sorten A2 eingesetzt. In einer weiteren Ausführungsform der Erfindung werden zum überwiegenden Anteil drei Sorten A2 eingesetzt. In einer weiteren Ausführungsform der Erfindung werden vier und mehr Sorten A2 eingesetzt. In einer Ausführungsform der Erfindung wird zum überwiegenden Anteil nur eine Sorte B2 eingesetzt. In einer weiteren Ausführungsform der Erfindung werden zum überwiegenden Anteil nur zwei Sorten B2 eingesetzt. In einer weiteren Ausführungsform der Erfindung werden zum überwiegenden Anteil drei Sorten B2 eingesetzt. In einer weiteren Ausführungsform der Erfindung werden vier und mehr Sorten B2 eingesetzt. In einer Ausführungsform der Erfindung enthält das erfindungsgemäß hergestellte teilaromatische Copolyamid zwei oder mehr A2-Spezies, aber überwiegend nur ein B2-Spezies. In einer weiteren Ausführungsform der Erfindung enthält das erfindungsgemäß hergestellte teilaromatische Copolyamid zwei oder mehr B2-Spezies, aber überwiegend nur ein A2-Spezies. In einer anderen Ausführungsform der Erfindung enthält das erfindungsgemäß hergestellte teilaromatische Copolyamid zwei oder mehr A2-Spezies und auch zwei oder mehr B2-Spezies.

In einer Ausführungsform der Erfindung enthält das erfindungsgemäß hergestellte teilaromatische Copolyamid zum überwiegenden Anteil nur drei Sorten von Fragmentspezies, PA-A2ₐ₂|B2₆₂| AB_{ab} mit a2+b2+ab > 90 mol%, bevorzugt a2+b2+ab > 95 mol%, besonders bevorzugt a2+b2+ab > 98 mol%. In einer Ausführungsform der Erfindung gilt a2+b2 > ab/2. Da A2+B2-Wiederholeinheiten im Polyamid zwei Amidgruppen aufweisen, während eine AB-Wiederholeinheit eine Amidgruppe repräsentiert, müssen für viele Eigenschaften im Polyamid jeweils zwei AB-Wiederholeinheiten ähnlich wie eine A2+B2-Paarung betrachtet werden. Definiert man dann als Hilfsgröße ϕ = (a2+b2)/(a2 + b2 + ab/2), dann gilt für ϕ in einer Ausführungsform der Erfindung 0,65 < 6, in zwei bevorzugten Ausführungsformen 0,65 < ϕ < 0,75 oder 0,85 < ϕ und in zwei besonders bevorzugten Ausführungsformen 0,68 < ϕ < 0,72 oder 0,95 < ϕ. In einer Ausführungsform der Erfindung wird neben den AB-Spezies zum überwiegenden Anteil nur eine Sorte A2 eingesetzt. In einer weiteren Ausführungsform der Erfindung werden neben den AB-Spezies zum überwiegenden Anteil nur zwei Sorten A2 eingesetzt. In einer weiteren Ausführungsform der Erfindung werden neben den AB-Spezies zum überwiegenden Anteil drei Sorten A2 eingesetzt. In einer weiteren Ausführungsform der Erfindung werden neben den AB-Spezies vier und mehr Sorten A2 eingesetzt. In einer Ausführungsform der Erfindung wird neben den AB-Spezies zum überwiegenden Anteil nur eine Sorte B2 eingesetzt. In einer weiteren Ausführungsform der Erfindung werden neben den AB-Spezies zum überwiegenden Anteil nur zwei Sorten B2 eingesetzt. In einer weiteren Ausführungsform der Erfindung werden neben den AB-Spezies zum überwiegenden Anteil drei Sorten B2 eingesetzt. In einer weiteren Ausführungsform der Erfindung werden neben den AB-Spezies vier und mehr Sorten B2 eingesetzt. In einer Ausführungsform der Erfindung enthält das erfindungsgemäß hergestellte teilaromatische Copolyamid neben den AB-Spezies zwei oder mehr A2-Spezies, aber überwiegend nur ein B2-Spezies. In einer weiteren Ausführungsform der Erfindung enthält das erfindungsgemäß hergestellte teilaromatische Copolyamid neben den AB-Spezies zwei oder mehr B2-Spezies, aber überwiegend nur ein A2-Spezies. In einer anderen Ausführungsform der Erfindung enthält das erfindungsgemäß hergestellte teilaromatische Copolyamid neben den AB-Spezies zwei oder mehr A2-Spezies und auch zwei oder mehr B2-Spezies. In einer anderen Ausführungsform der Erfindung enthält das erfindungsgemäß hergestellte teilaromatische Copolyamid ein AB-Spezies, ein A2-Spezies und ein B2-Spezies. In einer anderen Ausführungsform der Erfindung enthält das erfindungsgemäß hergestellte teilaromatische Copolyamid ein AB-Spezies, zwei oder mehr A2-Spezies und ein B2-Spezies. In einer anderen Ausführungsform der Erfindung enthält das erfindungsgemäß hergestellte teilaromatische Copolyamid ein AB-Spezies, ein A2-Spezies und zwei oder mehr B2-Spezies. In einer anderen Ausführungsform der Erfindung enthält das erfindungsgemäß hergestellte teilaromatische Copolyamid zwei oder mehr AB-Spezies, ein A2-Spezies und ein B2-Spezies. In einer anderen Ausführungsform der Erfindung enthält das erfindungsgemäß hergestellte teilaromatische Copolyamid zwei oder mehr AB-Spezies, zwei oder mehr A2-Spezies und ein B2-Spezies. In einer anderen Ausführungsform der Erfindung enthält das erfindungsgemäß hergestellte teilaromatische Copolyamid zwei oder mehr AB-Spezies, ein A2-Spezies und zwei oder mehr B2-Spezies. In einer anderen Ausführungsform der Erfindung enthält das erfindungsgemäß hergestellte teilaromatische Copolyamid zwei oder mehr AB-Spezies, zwei oder mehr A2-Spezies und zwei oder mehr B2-Spezies.

In einer Ausführungsform enthält das Polymer zwar zum überwiegenden Anteil Fragmentspezies der Funktionalität f_{A+B} = 2 (A2, B2, AB), aber bereits signifikante Anteile an mono-funktionalen Spezies f_{A+B} = 1 (A1, B1).

In einer Ausführungsform enthält das Polymer zwar zum überwiegenden Anteil Fragmentspezies der Funktionalität f_{A+B} = 2 (A2, B2, AB), aber bereits signifikante Anteile an tri-funktionalen Spezies f_{A+B} = 3 (B3, A2B, ...).

In einer Ausführungsform enthält das Polymer zwar zum überwiegenden Anteil Fragmentspezies der Funktionalität f_{A+B} = 2 (A2, B2, AB), aber bereits signifikante Anteile sowohl an mono-funktionalen Spezies f_{A+B} = 1 (A1, B1) als auch an tri-funktionalen Spezies f_{A+B} = 3 (B3, A2B, ...).

In einer Ausführungsform enthält das Polymer zwar zum überwiegenden Anteil Fragmentspezies der Funktionalität f_{A+B} =2 (A2, B2, AB), aber bereits signifikante Anteile sowohl an mono-funktionalen Spezies f_{A+B} = 1 (A1, B1) als auch an mehr-funktionalen Spezies f_{A+B} > 2.

Unabhängig von der vorherigen Definition lassen sich die nach dem erfindungsgemäßen Verfahren herstellbaren Polyamide auch durch die zu ihrer Herstellung eingesetzten Monomere beschreiben. Im ersten Schritt des erfindungsgemäßen Verfahrens wird eine wässrige Lösung bereitgestellt, die wenigstens ein polyamidbildendes, d. h. zur Polyamidbildung geeignetes, Monomer enthält. Bevorzugt sind die polyamidbildenden Monomere ausgewählt unter
A) unsubstituierten oder substituierten aromatischen Dicarbonsäuren und Derivaten von unsubstituierten oder substituierten aromatischen Dicarbonsäuren,
B) unsubstituierten oder substituierten aromatischen Diaminen,
C) aliphatischen oder cycloaliphatischen Dicarbonsäuren,
D) aliphatischen oder cycloaliphatischen Diaminen,
E) Monocarbonsäuren,
F) Monoaminen,
G) mindestens dreiwertigen Aminen,
H) Lactamen,
I) ω-Aminosäuren, und
K) von A) bis I) verschiedenen, damit cokondensierbaren Verbindungen.

In einer bevorzugten Ausführungsform der Erfindung sind die polyamidbildenden Monomere zur Bildung aliphatischer Polyamide vom Typ PA Z1 Z2 (wie PA 66) geeignet. Hierzu gilt die Maßgabe, dass mindestens eine der Komponenten C) oder D) vorhanden sein muss und keine der Komponenten A) und B) vorhanden sein darf. Für aliphatische Polyamide vom Typ PA Z (wie PA 6 oder PA 12) gilt die Maßgabe, dass mindestens die Komponente H) vorhanden sein muss.

In einer bevorzugten Ausführungsform der Erfindung sind die polyamidbildenden Monomere zur Bildung teilaromatischer Polyamide geeignet. Hiezu gilt die Maßgabe, dass mindestens eine der Komponenten A) oder B) und mindestens eine der Komponenten C) oder D) vorhanden sein muss.

Die aromatischen Dicarbonsäuren A) sind bevorzugt ausgewählt unter jeweils unsubstituierter oder substituierter Phthalsäure, Terephthalsäure, Isophthalsäure, Naphthalindicarbonsäuren oder Diphenyldicarbonsäuren und den Derivaten und Mischungen der zuvor genannten aromatischen Dicarbonsäuren.

Substituierte aromatische Dicarbonsäuren A) weisen vorzugsweise wenigstens einen C₁-C₄-Alkylrest auf. Besonders bevorzugt weisen substituierte aromatische Dicarbonsäuren A) einen oder zwei C₁-C₄-Alkylreste auf. Diese sind vorzugsweise ausgewählt unter Methyl, Ethyl, n-Propyl, Isopropyl, n-Butyl, iso-Butyl, sek-Butyl und tert-Butyl, besonders bevorzugt Methyl, Ethyl und n-Butyl, ganz besonders bevorzugt Methyl und Ethyl und insbesondere Methyl. Substituierte aromatische Dicarbonsäuren A) können auch weitere funktionelle Gruppen tragen, welche die Amidierung nicht stören, wie beispielsweise 5-Sulfoisophthalsäure, ihre Salze und Derivate. Hierunter ist das Natriumsalz des 5-Sulfoisophthalsäuredimethylesters bevorzugt.

Bevorzugt ist die aromatische Dicarbonsäure A) ausgewählt unter unsubstituierter Terephthalsäure, unsubstituierter Isophthalsäure, unsubstituierten Naphthalindicarbonsäuren, 2-Chloroterephthalsäure, 2-Methylterephthalsäure, 5-Methylisophthalsäure und 5-Sulfoisophthalsäure. Besonders bevorzugt wird als aromatische Dicarbonsäure A) Terephthalsäure, Isophthalsäure oder ein Gemisch aus Terephthalsäure und Isophthalsäure eingesetzt.

Bevorzugt weist die wässrige Lösung einen Anteil von aromatischen Dicarbonsäuren an allen Dicarbonsäuren von wenigstens 50 mol%, besonders bevorzugt von 70 mol% bis 100 mol%, auf. In einer bevorzugten Ausführungsform der Erfindung weist die wässrige Lösung einen Anteil an Terephthalsäure oder Isophthalsäure oder einem Gemisch aus Terephthalsäure und Isophthalsäure, bezogen auf alle Dicarbonsäuren von wenigstens 50 mol%, bevorzugt von 70 mol% bis 100 mol%, auf.

Die aromatischen Diamine B) sind bevorzugt ausgewählt unter Bis-(4-amino-phenyl)-methan, 3-Methylbenzidin, 2,2-Bis-(4-aminophenyl)-propan, 1,1-Bis-(4-aminophenyl)-cyclohexan, 1,2-Diaminobenzol, 1,4-Diaminobenzol, 1,4-Diaminonaphthalin, 1,5-Diaminonaphthalin, 1,3-Diaminotoluol(e), m-Xylylendiamin, N,N'-Dimethyl-4,4'-biphenyl-diamin, Bis-(4-methyl-aminophenyl)-methan, 2,2-Bis-(4-methylaminophenyl)-propan oder Gemischen davon. Besonders bevorzugt wird als aromatisches Diamin m-Xylylendiamin eingesetzt.

Die aliphatischen oder cycloaliphatischen Dicarbonsäuren C) sind vorzugsweise ausgewählt unter Oxalsäure, Malonsäure, Bernsteinsäure, Glutarsäure, Adipinsäure, Pimelinsäure, Korksäure, Azelainsäure, Sebacinsäure, Undecan-1,11-dicarbonsäure, Dodecan-1,12-dicarbonsäure, Maleinsäure, Fumarsäure oder Itaconsäure, cis- und trans-Cyclohexan-1,2-dicarbonsäure, cis- und trans-Cyclohexan-1,3-dicarbonsäure, cis- und trans-Cyclohexan-1,4-dicarbonsäure, cis- und trans-Cyclopentan-1,2-dicarbonsäure, cis- und trans-Cyclopentan-1,3-dicarbonsäure und Mischungen davon.

Die aliphatischen oder cycloaliphatischen Diamine D) sind vorzugsweise ausgewählt unter Ethylendiamin, Propylendiamin, Tetramethylendiamin, Pentamethylendiamin, Hexamethylendiamin, Heptamethylendiamin, Octamethylendiamin, Nonamethylendiamin, 2-Methyl-1,8-octamethylendiamin, Decamethylendiamin, Undecamethylendiamin, Dodecamethylendiamin, 2-Methylpentamethylendiamin, 2,2,4-Trimethylhexamethylendiamin, 2,4,4-Trimethylhexamethylendiamin, 5-Methylnonamethylendiamin, 2,4-Dimethyloctamethylendiamin, 5-Methylnonandiamin, Bis-(4-aminocyclohexyl)-methan, 3,3'-Dimethyl-4,4'diaminodicyclohexylmethan und Mischungen davon.

Besonders bevorzugt ist das Diamin D) ausgewählt unter Hexamethylendiamin, 2-Methylpentamethylendiamin, Octamethylendiamin, Nonamethylendiamin, Decamethylendiamin, Undecamethylendiamin, Dodecamethylendiamin, Bis-(4-aminocyclohexyl)-methan, 3,3'-Dimethyl-4,4'diaminodicyclohexylmethan und Mischungen davon.

In einer bevorzugten Ausführungsform der Erfindung enthält die wässrige Lösung wenigstens ein Diamin D), das ausgewählt ist unter Hexamethylendiamin, Bis-(4-aminocyclohexyl)-methan (PACM), 3,3'-Dimethyl-4,4'diaminodicyclohexylmethan (MACM), Isophorondiamin (IPDA) und Mischungen davon. In einer besonders bevorzugten Ausführungsform enthält die wässrige Lösung als Diamin D) ausschließlich Hexamethylendiamin. In einer weiteren besonders bevorzugten Ausführungsform enthält die wässrige Lösung als Diamin D) ausschließlich Bis-(4-aminocyclohexyl)-methan. In einer weiteren besonders bevorzugten Ausführungsform enthält die wässrige Lösung als Diamin D) ausschließlich 3,3'-Dimethyl-4,4'diaminodicyclohexylmethan (MACM). In einer weiteren besonders bevorzugten Ausführungsform enthält die wässrige Lösung als Diamin D) ausschließlich Isophorondiamin (IPDA).

Die wässrige Lösung zur Herstellung aliphatischer oder teilaromatischer Polyamid-Oligomere kann wenigstens eine Monocarbonsäure E) enthalten. Die Monocarbonsäuren E) dienen dabei der Endverkappung der erfindungsgemäß hergestellten Polyamid-Oligomere. Geeignet sind grundsätzlich alle Monocarbonsäuren, die befähigt sind, unter den Reaktionsbedingungen der Polyamidkondensation mit zumindest einem Teil der zur Verfügung stehenden Aminogruppen zu reagieren. Geeignete Monocarbonsäuren E) sind aliphatische Monocarbonsäuren, alicyclische Monocarbonsäuren und aromatische Monocarbonsäuren. Dazu zählen Essigsäure, Propionsäure, n-, iso- oder tert.-Buttersäure, Valeriansäure, Trimethylessigsäure, Capronsäure, Önanthsäure, Caprylsäure, Pelargonsäure, Caprinsäure, Undecansäure, Laurinsäure, Tridecansäure, Myristinsäure, Palmitinsäure, Stearinsäure, Pivalinsäure, Cyclohexancarbonsäure, Benzoesäure, Methylbenzoesäuren, 1-Naphthalincarbonsäure, 2-Naphthalincarbonsäure, Phenylessigsäure, Ölsäure, Ricinolsäure, Linolsäure, Linolensäure, Erucasäure, Fettsäuren aus Soja, Leinsamen, Ricinus und Sonnenblume, Acrylsäure, Methacrylsäure, tertiäre gesättigte Monocarbonsäuren (beispielsweise Versatic^{®}-Säuren der Firma Royal Dutch Shell plc) und Mischungen davon.

Werden als Monocarbonsäuren E) ungesättigte Carbonsäuren oder deren Derivate eingesetzt, kann es sinnvoll sein, der wässrigen Lösung handelsübliche Polymerisationsinhibitoren zuzugeben.

Besonders bevorzugt ist die Monocarbonsäure E) ausgewählt unter Essigsäure, Propionsäure, Benzoesäure und Mischungen davon. In einer ganz besonders bevorzugten Ausführungsform enthält die wässrige Lösung als Monocarbonsäure E) ausschließlich Essigsäure. In einer weiteren ganz besonders bevorzugten Ausführungsform enthält die wässrige Lösung als Monocarbonsäure E) ausschließlich Propionsäure. In einer weiteren ganz besonders bevorzugten Ausführungsform enthält die wässrige Lösung als Monocarbonsäure E) ausschließlich Benzoesäure.

Die wässrige Lösung zur Herstellung von aliphatischen oder teilaromatischen Polyamid-Oligomeren kann wenigstens ein Monoamin F) enthalten. Dabei enthalten Lösungen zur Herstellung von aliphatischen oder teilaromatischen Polyamid-Oligomeren nur aliphatische Monoamine oder alicyclische Monoamine. Die Monoamine F) dienen dabei der Endverkappung der erfindungsgemäß hergestellten Polyamid-Oligomere. Geeignet sind grundsätzlich alle Monoamine, die befähigt sind, unter den Reaktionsbedingungen der Polyamidkondensation mit zumindest einem Teil der zur Verfügung stehenden Carbonsäuregruppen zu reagieren. Geeignete Monoamine F) sind aliphatische Monoamine, alicyclische Monoamine und aromatische Monoamine. Dazu zählen Methylamin, Ethylamin, Propylamin, Butylamin, Hexylamin, Heptylamin, Octylamin, Decylamin, Stearylamin, Dimethylamin, Diethylamin, Dipropylamin, Dibutylamin, Cyclohexylamin, Dicyclohexylamin, Anilin, Toluidin, Diphenylamin, Naphthylamin und Mischungen davon.

Die wässrige Lösung zur Herstellung von aliphatischen oder teilaromatischen Polyamid-Oligomeren kann zusätzlich wenigstens ein mindestens dreiwertiges Amin G) enthalten. Hierzu gehören N'-(6-aminohexyl)hexan-1,6-diamin, N'-(12-aminododecyl)-dodecan-1,12-diamin, N'-(6-aminohexyl)dodecan-1,12-diamin, N'-[3-(aminomethyl)-3,5,5-trimethyl-cyclohexyl]hexan-1,6-diamin, N'-[3-(aminomethyl)-3,5,5-trimethyl-cyclohexyl]dodecan-1,12-diamin, N'-[(5-amino-1,3,3-trimethyl-cyclohexyl)methyl]hexan-1,6-diamin, N'-[(5-amino-1,3,3-trimethyl-cyclohexyl)methyl]dodecan-1,12-diamin, 3-[[[3-(aminomethyl)-3,5,5-trimethyl-cyclohexyl]amino]methyl]-3,5,5-trimethyl-cyclo-hexanamin, 3-[[(5-amino-1,3,3-trimethyl-cyclohexyl)methylamino]methyl]-3,5,5-trimethyl-cyclohexanamin, 3-(Aminomethyl)-N-[3-(aminomethyl)-3,5,5-trimethyl-cyclohexyl]-3,5,5-trimethyl-cyclohexanamin. Bevorzugt werden keine mindestens dreiwertigen Amine G) eingesetzt.

Geeignete Lactame H) sind ε-Caprolactam, 2-Piperidon (δ-Valerolatam), 2-Pyrrolidon (γ-Butyrolactam), Capryllactam, Önanthlactam, Lauryllactam und Mischungen davon.

Geeignete ω-Aminosäuren I) sind 6-Aminocapronsäure, 7-Aminoheptansäure, 11-Aminoundecansäure, 12-Aminododecansäure und Mischungen davon.

Geeignete von A) bis I) verschiedene, damit cokondensierbare Verbindungen K) sind wenigstens dreiwertige Carbonsäuren, Diaminocarbonsäuren, etc.

Geeignete Verbindungen K) sind weiterhin 4-[(Z)-N-(6-Aminohexyl)-C-hydroxy-carbon-imidoyl]benzoesäure, 3-[(Z)-N-(6-Aminohexyl)-C-hydroxy-carbonimidoyl]benzoesäure, (6Z)-6-(6-Aminohexylimino)-6-hydroxy-hexancarbonsäure, 4-[(Z)-N-[(5-Amino-1,3,3-trimethyl-cyclohexyl)methyl]-C-hydroxy-carbonimidoyl]benzoesäure, 3-[(Z)-N-[(5-Amino-1,3,3-trimethyl-cyclohexyl)methyl]-C-hydroxy-carbonimidoyl]benzoesäure, 4-[(Z)-N-[3-(Aminomethyl)-3,5,5-trimethyl-cyclohexyl]-C-hydroxy-carbonimidoyl]benzoesäure, 3-[(Z)-N-[3-(Aminomethyl)-3,5,5-trimethyl-cyclohexyl]-C-hydroxy-carbonimidoyl]-benzoesäure und Mischungen davon.

In einer bevorzugten Ausführungsform der Erfindung dient das erfindungsgemäße Verfahren zur Herstellung eines aliphatischen Polyamid-Oligomers.

Das Polyamid ist dann vorzugsweise ausgewählt unter PA 4, PA 5, PA 6, PA 7, PA 8, PA 9, PA 10, PA 11, PA 12, PA 46, PA 66, PA 666, PA 69, PA 610, PA 612, PA 96, PA 99, PA 910, PA 912, PA 1212, und Copolymeren und Gemischen davon. Besonders bevorzugt handelt es sich bei dem aliphatischen Polyamid um PA 6, PA 66 oder PA 666, ganz besonders bevorzugt um PA 6.

In einer weiteren bevorzugten Ausführungsform der Erfindung dient das erfindungsgemäße Verfahren zur Herstellung eines teilaromatischen Polyamids. Bevorzugt ist das Polyamid dann ausgewählt unter PA 6.T, PA 9.T, PA8.T, PA 10.T, PA 12.T, PA 6.I, PA 8.I, PA 9.I, PA 10.I, PA 12.I, PA 6.T/6, PA 6.T/10, PA 6.T/12 PA 6.T/6.I, PA6.T/8.T, PA 6.T/9.T, PA 6.T/10T, PA 6.T/12.T, PA 12.T/6.T, PA 6.T/6.I/6, PA 6.T/6.I/12, PA 6.T/6.I/6.10, PA 6.T/6.I/6.12, PA 6.T/6.6, PA 6.T/6.10, PA 6.T/6.12, PA 10.T/6, PA 10.T/11, PA 10.T/12, PA 8.T/6.T, PA 8.T/66, PA 8.T/8.I, PA 8.T/8.6, PA 8.T/6.I, PA 10.T/6.T, PA 10.T/6.6, PA 10.T/10.I, PA 10T/10.1/6.T, PA 10.T/6.I, PA 4.T/4.I/46, PA 4.T/4.I/6.6, PA 5.T/5.I, PA 5.T/5.I/5.6, PA 5.T/5.I/6.6, PA 6.T/6.I/6.6, PA MXDA.6, PA IPDA.I, PA IPDA.T, PA MACM.I, PA MACM.T, PA PACM.I, PA PACM.T, PA MXDA.I, PA MXDA.T, PA 6.T/IPDA.T, PA 6.T/MACM.T, PA 6.T/PACM.T, PA 6.T/MXDA.T, PA 6.T/6.I/8.T/8.I, PA 6.T/6.I/10.T/10.I, PA 6.T/6.I/IPDA.T/IPDA.I, PA 6.T/6.I/MXDAT/MXDAI, PA 6.T/6.I/MACM.T/MACM.I, PA 6.T/6.I/PACM.T/PACM.I PA 6.T/10.T/IPDA.T, PA 6.T/12.T/IPDA.T, PA 6.T/10.T/PACM.T, PA 6.T/12.T/PACM.T PA 10.T/IPDA.T, PA 12.T/IPDA.T und Copolymeren und Gemischen davon. Besonders bevorzugt ist das Polyamid dann ausgewählt unter PA 6.T, PA 9.T, PA 10.T, PA 12.T, PA 6.I, PA 9.I, PA 10.I, PA 12.I, PA 6.T/6.I, PA 6.T/6, PA6.T/8.T, PA 6.T/10T, PA 10.T/6.T, PA 6.T/12.T, PA12.T/6.T PA IPDA.I, PA IPDA.T, PA 6.T/IPDA.T, PA 6.T/6.I/IPDA.T/IPDA.I, PA 6.T/10.T/IPDA.T, PA 6.T/12.T/IPDA.T, PA 6.T/10.T/PACM.T, PA 6.T/12.T/PACM.T PA 10.T/IPDA.T, PA 12.T/IPDA.T und Copolymeren und Gemischen davon.

Das erfindungsgemäße Verfahren umfasst mehrere Schritte und beginnt mit der kontinuierlichen Förderung der wasserhaltigen Monomerenlösung beispielsweise aus einem oder mehreren temperierbaren und inertisierbaren Autoklaven als Vorratsgefäßen. Die Bereitung der wasserhaltigen Monomerenlösung selbst kann in temperierbaren und inertisierbaren Ansatzkesseln erfolgen, die zweckmäßigerweise gerührt oder umgepumpt werden können. Grundsätzlich kann die Bereitung der wasserhaltigen Monomerenlösung auch kontinuierlich in einem geeigneten Strömungsaggregat mit Mischelementen erfolgen.

Zur Bereitung der Monomerenlösung können ungefähr äquimolare Mengen Dicarbonsäuren und Diamine verwendet werden, wobei zur Herstellung teilaromatischer Polyamid-Oligomere mindestens eine aromatische Dicarbonsäure enthalten sein muss. Die Kontrolle der gewünschten Zusammensetzung, gegebenenfalls inklusive eines definierten Überschusses an Diamin oder Dicarbonsäure, kann durch einfache Säure/Base-Titration erfolgen und die wasserhaltige Mischung gegebenenfalls durch angepasste Dosierung des fehlenden Säure- oder Aminanteils auf die gewünschte Zusammensetzung eingestellt werden.

Zusätzlich zu Monomeren und Wasser kann die Monomerlösung weitere Komponenten enthalten. Diese sind vorzugsweise ausgewählt unter Katalysatoren, Kettenreglern, anwendungsbedingten Additiven und Mischungen davon. Geeignete Additive sind Flammschutzmittel, anorganische und organische Stabilisatoren, Gleitmittel, Farbstoffe, Nukleierungsmittel, metallische Pigmente, Metallflitter, metallbeschichtete Partikel, Antistatika, Leitfähigkeitsadditive, Entformungsmittel, optische Aufheller, Entschäumer, Füll- und/oder Verstärkungsmittel, etc.

Zur erfindungsgemäßen Herstellung der Polyamid-Oligomere kann wenigstens ein Katalysator eingesetzt werden. Geeignete Katalysatoren sind vorzugsweise ausgewählt unter anorganischen und/oder organischen Phosphor-, Zinn- oder Bleiverbindungen und deren Mischungen.

Als Katalysatoren geeignete Zinnverbindungen sind z. B. Zinn(II)-oxid, Zinn(II)-hydroxid, Zinn(II)-Salze ein- oder mehrwertiger Carbonsäuren, z. B. Zinn(II)-dibenzoat, Zinn(II)-di(2-ethylhexanoat), Zinn(II)-oxalat, Dibutylzinnoxid, Butylzinnsäure(C₄H₉-SnOOH), Dibutyl-Zinn-dilaurat, etc. Geeignete Bleiverbindungen sind z. B. Blei(II)-oxid, Blei(II)-hydroxid, Blei(II)-acetat, basisches Blei(II)-acetat, Blei(II)-carbonat, etc.

Bevorzugte Katalysatoren sind Phosphorverbindungen wie Phosphorsäure, phosphorige Säure, hypophosphorige Säure, Phenylphosphonsäure, Phenylphosphinsäure und/oder deren Salze mit 1- bis 3-wertigen Kationen wie z. B. Na, K, Mg, Ca, Zn oder AI und/oder deren Ester wie z. B. Triphenylphosphat, Triphenylphosphit oder Tris-(nonylphenyl)-phosphit. Besonders bevorzugt als Katalysator sind die hypophosphorige Säure und deren Salze, wie Natriumhypophosphit.

Bevorzugt werden die Katalysatoren in einer Menge von 0,005 bis 2,5 Gew.-%, bezogen auf das Gesamtgewicht der bereitgestellten Monomerlösung, eingesetzt.

Besonders bevorzugt werden hypophosphorige Säure und/oder ein Salz der hypophosphorigen Säure in einer Menge von 50 bis 1000 ppm, besonders bevorzugt von 100 bis 500 ppm, bezogen die Gesamtmenge der zur Polyamidbildung geeigneten Komponenten (= Komponenten A) bis K)) eingesetzt.

Die ringöffnende Lactampolymerisation kann rein hydrolytisch ohne Einsatz eines Katalysators erfolgen. Bei der aktivierten anionischen Lactampolymerisation werden Katalysatoren eingesetzt, welche die Bildung von Lactamanionen ermöglichen. Geeignete Katalysatoren und Aktivatoren sind dem Fachmann bekannt. Die Polykondensation von Aminonitrilen, z. B. die Herstellung von Polyamid 6 aus 6-Aminocapronitril (ACN) kann in Gegenwart eines Heterogenkatalysators, wie TiO₂, durchgeführt werden.

Zur Regelung der Molmasse kann wenigstens ein Kettenregler eingesetzt werden. Geeignete Kettenregler sind die zuvor bei den zur Polyamidbildung geeigneten Komponenten genannten Monocarbonsäuren A) und Monoamine F). Bevorzugt ist der Kettenregler ausgewählt unter Essigsäure, Propionsäure, Buttersäure, Valeriansäure, Capronsäure, Laurinsäure, Stearinsäure, 2-Ethylhexansäure, Cyclohexansäure, Benzoesäure, 3-(3,5-di-tert-butyl-4-hydroxyphenyl)propansäure, 3,5-di-tert-butyl-4-hydroxybenzoesäure, 3-(3-tert-butyl-4-hydroxy-5-methylphenyl)propansäure, 2-(3,5-di-tert-butyl-4-hydroxybenzylthio)essigsäure, 3,3-bis(3-tert-butyl-4-hydroxyphenyl)butansäure, Butylamin, Pentylamin, Hexylamin, 2-Ethylhexylamin, n-Octylamin, n-Dodecylamin, n-Tetradecylamin, n-Hexadecylamin, Stearylamin, Cyclohexylamin, 3-(Cyclohexyl-amino)propylamin, Methylcyclohexylamin, Dimethylcyclohexylamin, Benzylamin, 2-Phenylethylamin, 2,2,6,6-tetramethylpiperidin-4-amin, 1,2,2,6,6-Pentamethylpiperidin-4-amin, 4-Amino-2,6-di-tert-butylphenol und Mischungen davon. Es können auch andere monofunktionelle Verbindungen als Regler eingesetzt werden, die mit einer Amino- oder Säuregruppe reagieren können, wie Anhydride, Isocyanate, Säurehalogenide oder Ester. Zur Regelung des Molekulargewichts kann auch eine Diaminkomponente oder eine Disäurekomponente in einen stöchiometrischen Überschuss eingesetzt werden. Ein derartiger geeigneter Kettenregler ist Hexamethylendiamin. Die übliche Einsatzmenge der Kettenregler liegt in einem Bereich von 5 bis 500 mmol pro kg Polyamid-Oligomer, vorzugsweise 10 bis 200 mmol pro kg Polyamid-Oligomer.

Gewünschtenfalls können der Monomerlösung weitere, von Katalysatoren und Kettenreglern verschiedene Additive zugesetzt werden.

Zu den Additiven, die speziell bereits der Monomerlösung zugesetzt werden können, zählen z. B. Antioxidantien, Lichtschutzmittel, übliche Verarbeitungshilfsmittel, Nukleierungsmittel und Kristallisationsbeschleuniger. Füll- und Verstärkungsstoffe hingegen werden vorzugsweise vor und/oder während der abschließenden Nachpolymerisation zugegeben. So können diese z. B. den erfindungsgemäß hergestellten Polyamid-Oligomeren bei der Nachpolymerisation in einem Extruder oder Kneter zugegeben werden.

Erfolgt die Bereitung der Monomerenlösung in einem Rührkessel, so wird bevorzugt eine gewisse Menge Wasser vorgelegt, die beschriebenen Amin- und Carbonsäureverbindungen in einer geeigneten Reihenfolge so zugeführt, dass die entstehende Neutralisationswärme genutzt werden kann und es im Eintrag und am Rührer zu möglichst wenig Feststoff-Agglomerationen kommt. Gegebenenfalls kann mit oder nach der Zugabe der beschriebenen Amin- und Carbonsäureverbindungen weiteres Wasser zugeführt werden oder eine oder mehrere der Ausgangsverbindungen bereits selbst als wässrige Lösung dosiert werden.

Die Monomerenlösung kann insbesondere 5 bis 95 Gew.-% Wasser, bezogen auf die Summe aus Wasser und den beschriebenen polyamidbildenden Monomeren, enthalten. Da im weiteren erfindungsgemäßen Verfahren der Kontrolle des jeweiligen Wasserhaushalts eine besondere Bedeutung zukommt, ist es zweckmäßig, den Wassergehalt im Löseschritt genau einzustellen. Bevorzugt ist der Wassergehalt so niedrig, dass keine unnötigen Energieverluste beim Wasserentzug im nachgeschalteten erfindungsgemäßen Polykondensationsverfahren auftreten. Umgekehrt ist der Wassergehalt vorzugsweise gerade so hoch, dass sich im Löseschritt die Ausgangsverbindungen noch vollständig zu einer fluid förderbaren Mischung lösen. Hierbei ist die wässrige Lösung am Ende des Löseschritts bevorzugt eine klare Lösung. Sie kann je nach Zusammensetzung der Ausgangsrezeptur aber auch ein trübes, förderbares Fluid definierter Zusammensetzung sein, indem die eigentliche Lösung noch phasenseparierte Anteile im Sinne einer Suspension oder Emulsion enthält. Besonders bevorzugt ist jedoch eine transparent klare Lösung.

Es ist vorteilhaft, wenn die Lösung 15 bis 55 Gew.-% Wasser enthält. Besonders vorteilhaft sind oft 18 bis 40 Gew.-% Wasser, und 20 bis30 Gew.-% Wasser sind ganz besonders vorteilhaft.

Erfolgt die Bereitung der Monomerenlösung in einem Rührkessel, so wird dieser nach dem Eintrag der Ausgangsverbindungen und Inertisierung zum Lösen auf Temperaturen von bevorzugt 90 °C bis 220 °C, besonders bevorzugt auf 100 °C bis 160 °C, ganz besonders bevorzugt 120 °C bis 140 °C, gebracht. Hierbei stellen sich die üblichen Wasserdampfpartialdrücke ein. Der Druck der Monomerenlösung bei einer gegebenen Temperatur kann gegenüber dem von reinem Wasser durch Elektrolyteffekte des Monomersalzes leicht erniedrigt sein. Andererseits kann der Druck in Anwesenheit weiterer flüchtiger Komponenten, beispielsweise Alkohole, um deren Partialdampfdruck erhöht sein.

Lösungen mit 18 bis 35 Gew.-% Wasser weisen bei Temperaturen von 100 °C bis 160 °C Drücke von insbesondere 0,1 MPa bis 0,6 MPa auf. Bei Temperaturen bis 220 °C stellen sich Drücke von insbesondere bis zu 2,3 MPa ein. Vor allem bei Temperaturen von mehr als 140 °C kann der Lösevorgang gegebenenfalls unter partieller Vorreaktion zu niedermolekularen Oligoamiden erfolgen.

Erfolgt die Bereitung der Monomerenlösung in einem Rührkessel, so wird die Lösezeit maßgeblich von der Geschwindigkeit des Aufheizvorgangs und gegebenenfalls der Korngrößenverteilung und/oder Polarität und/oder Schmelztemperatur der Ausgangsverbindungen abhängig sein.

Bei einem Wassergehalt von 15 bis 55 Gew.-% wird bei den angegebenen Temperaturen und Drücken unter Agitation eine geeignete, fluid förderbare und mehrstündig lagerbare Monomerenlösung, insbesondere nach 5 bis 120 Minuten, meist nach 10 bis 60 Minuten, erhalten.

Erfolgt die Bereitung der Monomerenlösung in einem Rührkessel, so wird nach Beendigung des Lösevorgangs der Kesselinhalt bevorzugt in ein Vorratsgefäß überführt.

Erfolgt die Bereitung der Monomerenlösung nicht chargenweise, sondern in einem vollkontinuierlichen Löseaggregat, so werden mutatis mutandis die für den Rührkessel genannten Lösebedingungen übertragen. Der zeitliche Verlauf der Temperaturerhöhung beim Aufheizen des Kessels und die damit verbundene Druckerhöhung kann hierbei als räumlicher Verlauf zum Beispiel in einer Kesselkaskade oder in einem Strömungsaggregat abgebildet werden.

In einer Ausführungsform der Erfindung wird als kontinuierliches Löseaggregat ein Eintragskessel mit Umpumpung und ein daran anschließendes doppelwandig beheiztes Rohr verwendet, wobei Wasser und wasserhaltige Diaminlösung mittels Dosierpumpen eingetragen werden und Förderschnecken die Dosierung der festen Ausgangsverbindungen übernehmen. Auch hier kann nach der Lösestrecke die erhaltene Monomerenlösung in ein Vorratsgefäß gefördert werden.

Als Vorratsgefäß dienen im erfindungsgemäßen Verfahren insbesondere ein oder mehrere temperierbare und inertisierbare Autoklaven. Die Autoklaven können zur Agitation der in ihnen bereitgehaltenen Monomerenlösung mit einem Rührer oder einer Pumpen-Umwälzung ausgestattet sein. Die Autoklaven werden bevorzugt inertisiert, besonders bevorzugt mit Stickstoff.

Insbesondere entsprechen die Temperatur- und Druckbedingungen des Lagergefäßes weitgehend denen am Ende des Lösevorgangs. Vor allem, wenn für den Lösevorgang relativ hohe Temperaturen verwendet werden, bei denen über einen längeren Zeitraum bereits Umsetzungen der Monomere auftreten können, kann alternativ die Temperatur im Vorratsgefäß auch etwas niedriger gewählt werden. Hierbei ist jedoch vorzugsweise die Temperatur so einzustellen, dass keine substantiellen Anteile der Monomerenlösung als Feststoff ausfallen und gegebenenfalls sogar sedimentieren. Bevorzugt wird die Monomerenlösung unter Inertisierung bei einem leichten Stickstoffüberdruck und/oder einer leichten Stickstoffüberströmung vorgehalten.

Im erfindungsgemäßen kontinuierlichen Verfahren wird die Monomerenlösung dem Vorratsgefäß kontinuierlich entnommen und in Oligomerisierungsreaktor(en) über die Löse- bzw. Lagerungstemperatur hinaus erwärmt bis die Oligomerisierungsreaktion zu den Oligomeren genügend schnell, aber kontrollierbar ablaufen kann und die so erhaltenen Oligomere kontinuierlich ausgetragen oder einem weiteren Verfahren zur Herstellung höhermolekularer Polyamide zugeführt werden können.

Im erfindungsgemäßen kontinuierlichen Verfahren nähert sich während einer ersten mittleren Verweilzeit t1 die Temperatur der Reaktionsmischung bevorzugt einer ersten Oligomerisierungstemperatur OT1 an oder erreicht dieselbe. Hierbei nähert sich der Druck oder der Wasserdampfpartialdruck einem ersten Druck p1 an oder beträgt denselben. Anschließend nähert sich während einer zweiten mittleren Verweilzeit t2 die Temperatur der Reaktionsmischung einer zweiten Oligomerisierungstemperatur OT2 an oder erreicht dieselbe. Weiterhin nähert sich der Druck oder der Wasserdampfpartialdruck einem zweiten Druck p2 an oder beträgt denselben. Vorzugsweise gilt OT1 ≤ OT2 und t1 ≥ t2. Der erste Druck p1 entspricht vorzugsweise dem Sättigungsdampfdruck von Wasser bei der ersten Oligomerisierungstemperatur OT1 (gegebenenfalls leicht vermindert um elektrolytische Effekte und/oder gegebenenfalls erhöht um den Partialdampfdruck eines Alkohols), während der zweite Druck p2 unter dem Sättigungsdampfdruck von Wasser bei der zweiten Oligomerisierungstemperatur OT2 liegt. Letzteres entspricht einem gezielten Verlust an Wasser und volatilen Komponenten der Reaktionsmischung. Im erfindungsgemäßen kontinuierlichen Verfahren gilt bevorzugt p1 ≥ p2. Um den beim Verdampfen des Wassers auftretenden Energiebedarf der Reaktionsmischung zuzuführen und dieselbe auf die zweite Oligomerisierungstemperatur OT2 zu bringen oder zu halten, ist es in einer Ausführungsform der Erfindung bevorzugt, zu einer leicht überhitzten Oligomermischung am Ende der Verweilzeit t1 zu gelangen. Hierbei kann es auch in Abweichung der voranstehend beschriebenen Ausführungsform der Erfindung vorteilhaft sein, einen Temperaturverlauf OT1 ≥ OT2 zu wählen. Der immanente Wasserverlust der Reaktionsmischung begrenzt die zweite mittlere Verweilzeit t2 nach oben, da sie nicht phasenseparieren oder spontan kristallisieren sollen.

In einer besonderen Ausführungsform können anstelle einer einzigen Oligomerisierungstemperatur OT1 mehrerer aufeinanderfolgende Oligomerisierungstemperaturen OT1-1 bis OT1-x zum Einsatz kommen. Die Temperaturänderung kann stufenweise oder in Form eines Gradienten erfolgen. Zur Einstellung mehrerer verschiedener aufeinanderfolgender Oligomerisierungstemperaturen kann der Oligomerisierungsreaktor über verschiedene separat steuerbare Heizzonen verfügen. Alternativ können getrennte aufeinanderfolgende Oligomerisierungsreaktoren verwendet werden. Dabei wird der Temperaturverlauf meist aufsteigend gewählt, so dass OT1-1 ≤ OT1-2, etc. ist. Die Summe der jeweiligen zugeordneten Verweilzeiten t1-1 bis t1-x ergibt wiederum die Verweilzeit t1.

Der Kontrolle des Wasserdampfpartialdrucks kommt im erfindungsgemäßen kontinuierlichen Verfahren eine besondere Bedeutung bei. Das Aufbauen oder die Aufrechterhaltung eines bestimmten Wasserdampfpartialdrucks kann insbesondere durch die Einspeisung von Wasserdampf eines definierten Druckniveaus erfolgen. Umgekehrt bieten Regelventile die Möglichkeit, kontrolliert Wasserdampf und andere flüchtige Komponenten aus den jeweiligen Aggregaten abzulassen.

Die erste Oligomerisierungstemperatur OT1 liegt im erfindungsgemäßen Verfahren bevorzugt bei 220 °C bis 260 °C, besonders bevorzugt bei 225 °C bis 255 °C, ganz besonders bevorzugt bei 230 °C bis 250 °C. Die erste mittlere Verweilzeit t1 beträgt bevorzugt 0 min bis 240 min, besonders bevorzugt 45 min bis 120 min, ganz besonders bevorzugt 60 min bis 90 min. Der erste Druck p1 beträgt bevorzugt 1,5 MPa bis 5,0 MPa, besonders bevorzugt 2,5 MPa bis 4,5 MPa, ganz besonders bevorzugt 3,0 MPa bis 4,0 MPa. Die zweite Oligomerisierungstemperatur OT2 liegt bevorzugt bei 240 °C bis 300 °C, besonders bevorzugt bei 240 °C bis 280 °C, ganz besonders bevorzugt bei 240 °C bis 260 °C. Die zweite mittlere Verweilzeit t2 beträgt bevorzugt 0 min bis 60 min, besonders bevorzugt 20 min bis 50 min, ganz besonders bevorzugt 25 min bis 40 min. Der zweite Druck p2 beträgt bevorzugt 1,9 MPa bis 5,0 MPa, besonders bevorzugt 2,3 MPa bis 5,0 MPa, ganz besonders bevorzugt 2,5 MPa bis 4,0 MPa. Die Summe der Verweilzeiten t1 + t2 beträgt vorzugsweise mindestens 10 min.

In den Verfahrensabschnitten, in denen der Wassergehalt der Reaktionsmischung gesenkt wird, sind insbesondere kritische Randbedingungen bezüglich des Drucks bzw. des Wasserdampfpartialdrucks einzuhalten, um spontane Entmischungs- oder Kristallisationsphänomene der Reaktionsmischung zu vermeiden. Es wurde gefunden, dass für unterschiedliche Rezepturen von Polyamid-Oligomeren weitgehend unabhängig von den Reaktionstemperaturen kritische untere Wasserdampfpartialdrücke beobachtet werden, oberhalb derer genügend Wasser im System gehalten wird, um in ihrem Phasenverhalten kontrollierbare Reaktionsmischungen zu gewährleisten. Die kritischen unteren Wasserdampfpartialdrücke hängen von den Rezepturen und hier in erster Näherung von dem Verhältnis Zahl der Amidgruppen (n.NHCO) pro Zahl der Kohlenstoffatome (n.C) ab. In zweiter Näherung ist auch der Schmelzpunkt des jeweiligen Polyamids zu berücksichtigen. Der kritische untere Wasserdampfpartialdruck p.u. ergibt sich in erster Näherung aus Formel 1: $p . u . = 61 , 463 MPa ⋅ \frac{n . NHCO}{n . C} - 4 , 7193 MPa$ (Formel 1)

Der im erfindungsgemäßen kontinuierlichen Verfahren auftretende zweite Druck p2 muss gegebenenfalls auf ein Niveau oberhalb des kritischen unteren Wasserdampfpartialdrucks p.u. angehoben werden, wenn in einer Ausgestaltung des erfindungsgemäßen kontinuierlichen Verfahrens die Oligomermischung Entmischungs- oder Kristallisationsphänomene zeigt.

Als Oligomerisierungsreaktoren dienen im erfindungsgemäßen Verfahren bevorzugt zwei oder mehrere kontinuierlich beschick- und entleerbare Aggregate, die Temperaturen ermöglichen, die oberhalb der Löse- bzw. Lagerungstemperatur liegen, die erhöhte Drücke zulassen, um genügend Wasser im System zu halten, und von denen mindestens ein Aggregat so mit einer Druckregelung ausgestattet ist, dass Wasser kontrolliert der Reaktionsmischung entzogen werden kann. Beispiele für geeignete Aggregate sind ein temperierbarer Autoklav mit Dampfeinspeisung und/oder Druckregelventil, eine Kaskade von temperierbaren Autoklaven, von denen einer oder mehrere eine Dampfeinspeisung und/oder ein Druckregelventil aufweisen, ein temperierbarer Wärmetauscherreaktor bevorzugt als ein doppelwandig ausgeführter, temperierbarer Rohrreaktor, eine Kaskade von temperierbaren Wärmetauscherreaktoren bevorzugt als doppelwandig ausgeführte, temperierbare Rohrreaktoren bzw. Rohrbündelreaktoren oder eine Kombination der aufgeführten Aggregate.

In einer bevorzugten Ausführung der Erfindung wird ein Wärmetauscherreaktor in Kombination mit einem Autoklaven verwendet, der mit einem Druckregelventil und einem Bodenauslass ausgestattet ist. In einer besonders bevorzugten Ausführung der Erfindung beträgt die mittlere Verweilzeit im Wärmetauscherreaktor die erste mittlere Verweilzeit t1 und im Autoklaven die zweite mittlere Verweilzeit t2. Der Wärmetauscherreaktor kann bevorzugt ein doppelwandiger Rohrreaktor oder Rohrbündelreaktor sein. Der Wärmetauscherreaktor kann Einbauten wie Verdränger im Einlauf oder statische Mischer an geeigneten Stellen aufweisen. Der Autoklav kann doppelwandig ausgeführt sein und/oder eine Heizwendel enthalten und/oder einen Spitzboden aufweisen. Der Autoklav kann zur kontinuierlichen Durchmischung seines Inhalts gerührt oder umgepumpt werden. Der Autoklav kann zur Unterstützung des Wärmeeintrags mit einem Wärmetauscher in einem Umpump-Kreislauf versehen sein.

In einer weiteren bevorzugten Ausführung der Erfindung wird eine Kaskade von mindestens zwei temperierbaren Autoklaven verwendet, von denen mindestens der letzte mit einem Druckregelventil ausgestattet ist. In einer besonders bevorzugten Ausführung der Erfindung beträgt die mittlere Verweilzeit in den vorderen Autoklaven (umfassend maximal alle ohne den letzten Autoklaven) die erste mittlere Verweilzeit t1 und in den hinteren Autoklaven (umfassend mindestens den letzten Autoklaven) die zweite mittlere Verweilzeit t2. Die Autoklaven können doppelwandig ausgeführt sein und/oder Heizwendeln enthalten und/oder mit einem Wärmetauscher in einem Umpump-Kreislauf versehen sein. Die Autoklaven können zur kontinuierlichen Durchmischung ihrer Inhalte gerührt oder umgepumpt werden. Der letzte Autoklav weist bevorzugt einen Spitzboden mit Bodenauslass auf.

In einer Ausführungsform des erfindungsgemäßen kontinuierlichen Verfahrens werden die Polyamid-Oligomere so aus der Oligomerisierungszone ausgetragen, dass sie, gegebenenfalls mit anhaftendem Wasser, als Feststoff anfallen und als solche isoliert werden können. Diese Ausführungsform ist besonders geeignet, wenn die teilaromatischen Oligomere kristallin oder teilkristallin erstarren. Diese Ausführungsform ist weniger geeignet, wenn die teilaromatischen Oligomere amorph anfallen und/oder schwer als Feststoff erstarren.

In einer weiteren Ausführungsform des erfindungsgemäßen kontinuierlichen Verfahrens werden die Oligomere so aus der Oligomerisierungszone ausgetragen, dass sie schmelzeflüssig anfallen und ohne Isolierung kontinuierlich in ein weiteres Verfahren überführt werden können, in dem aus den Oligomeren höhermolekulare Polyamide hergestellt werden. Diese Ausführungsform ist sowohl für amorphe als auch für potentiell kristallisierende teilaromatische Oligomere geeignet.

In einer dritten Ausführungsform des erfindungsgemäßen kontinuierlichen Verfahrens werden die Oligomere so aus der Oligomerisierungszone ausgetragen, dass sie ganz oder teilweise als Feststoff anfallen, aber ohne Isolierung der Oligomere kontinuierlich in ein Verfahren überführt werden, in dem aus den Oligomeren höhermolekulare Polyamide hergestellt werden. Diese Ausführungsform ist sowohl für ausgewählte amorphe als auch für ausgewählte kristallisierende teilaromatische Oligomere geeignet.

Als vorteilhafte Aspekte des erfindungsgemäßen Verfahrens wurden erkannt, dass im Vergleich zu dem Stand der Technik höhere Durchsätze mit geringeren Investitionskosten realisiert werden können. Weiterhin entfallen die bei chargenweiser Herstellung der Oligomere auftretende Verweilzeit-Verluste beim Eintragen der Monomerenlösung, beim Aufheizen derselben auf Reaktionstemperatur, beim Austragen der Reaktionsmischung und beim darauffolgenden Abkühlen. Ein wichtiger Vorteil ist ebenfalls die Qualitätskonstanz der Produkte aus dem kontinuierlichen Verfahren, die nicht durch An- und Abfahrvorgänge eines diskontinuierlichen Prozesses in Mitleidenschaft gezogen wird. Von ökonomischer Relevanz ist außerdem, dass kontinuierliche Prozesse in der Regel mit geringerem Personalaufwand betrieben werden können und geringere Materialverluste mit Qualitätsabweichungen hinzunehmen sind. Diese Vorteile überkompensieren in der Regel mögliche Nachteile wie Materialverluste bei Rezepturumstellungen.

Ein besonderer Vorteil des erfindungsgemäßen Verfahrens ist, dass sich wesentlich einfacher als bei diskontinuierlichen Verfahren ein stationärer Zustand einstellen lässt, bei dem die Oligomere bei definierter Temperatur, definiertem Druck oder Wasserdampfpartialdruck und definierter Verweilzeit einen anzusteuernden Umsatz und damit die gewünschte mittlere Molmasse aufweisen. Auch die Breite der Molmassenverteilung lässt sich hiermit in vorteilhafter Weise steuern und damit auch gezielt engverteilte Oligomere herstellen.

Das erfindungsgemäße Verfahren lässt sich in einem weiten Zusammensetzungsbereich für Oligomere von teilkristallinen oder amorphen, thermoplastisch verarbeitbaren, teilaromatischen Polyamiden einsetzen.

Im erfindungsgemäßen Verfahren ist beim Austrag des Oligomeres insbesondere dafür zu sorgen, dass neben dem letzten Oligomerisierungs-Aggregat auch sämtliche Austragsleitungen, Einbauten und Förderaggregate auf der gleichen Temperatur und mindestens auf dem gleichen Wasserdampfpartialdruck wie im letzten Oligomerisierungs-Aggregat gehalten werden. In der Regel erübrigt sich eine aufwendige Bestimmung des Wasserdampfpartialdrucks und man kann stattdessen den Gesamtdruck des letzten Oligomerisierungs-Aggregats als Bezugsgröße verwenden, da die Partialdrücke der übrigen Gasbestandteile, wie Inertgas (beispielsweise Stickstoff), flüchtigen Ausgangsverbindungen (beispielsweise Hexamethylendiamin), geringen Anteilen anfänglich zugesetzter Alkohole oder eventuell sich bildende Zersetzungsprodukte (beispielsweise NH₃ aus Aminen oder CO₂ aus Carbonsäuren), gemessen am Gesamtdruck, vernachlässigbar klein sind. Der Anteil des Inertgases oder gegebenenfalls der Alkohole nimmt durch das nötige kontrollierte Entspannen während der zweiten mittleren Verweilzeit t2 ohnehin stark ab und wird dabei praktisch vollständig durch aus der Monomerenlösung stammendes und bei der Oligomerisierungsreaktion gebildetes verdampftes Wasser verdrängt.

Im Verfahren wird bevorzugt ein Umsatz von 67 % bis 97,5 %, besonders bevorzugt von 75 % bis 96 %, ganz besonders bevorzugt von 80 % bis 92 %, erreicht. Der in dieser Schrift angegebene Umsatz bezieht sich immer auf diejenige Funktionalität (Carboxyl- oder Aminofunktionalität), die sich in der Reaktionsmischung im Unterschuss befindet.

Das im erfindungsgemäßen Verfahren gebildete Polyamid-Oligomer weist damit einen Polymerisationsgrad von bevorzugt 3 bis 15, besonders bevorzugt von 4 bis 25, ganz besonders bevorzugt von 5 bis 12, auf. Je nach den verwendeten Ausgangsverbindungen entspricht dies absoluten Molmassen von 300 bis 8000 g/mol bzw. 400 bis 5000 g/mol bzw. 500 bis 2500 g/mol. Werden an den im erfindungsgemäßen Verfahren gebildeten Oligomeren Molmassenverteilungen mit Hilfe der Gelpermeationschromatographie in Hexafluorisopropanol (HFIP) gegen engverteilte PMMA-Standards bestimmt, so werden hierfür apparente Molmassen von 200 bis 4000 g/mol bzw. 250 bis 2500 g/mol bzw. 300 bis 1500 g/mol erhalten.

Sollen zum Ende des kontinuierlichen Verfahrens die Oligomere so aus der Oligomerisierungszone ausgetragen werden, dass sie als Feststoff anfallen und isoliert werden können, ist ein Sprühaustrag in ein inertisiertes Volumen bei Temperaturen unterhalb des Schmelzpunktes der Oligomere bevorzugt. Vor allem bei der Verwendung von Sprühdüsen profitiert man von der immanenten Konstanz kontinuierlicher Verfahren, da gelegentliche An- und Abfahrphasen im Vergleich zur kontinuierlichen Austragsdauer zu vernachlässigen sind und hierbei ein störungsfreier, gleichmäßiger Betrieb mit hoher Produkt- und Partikelkonstanz beim Versprühen erreicht werden kann. Alternativ zum Sprühaustrag kann auch der Austrag als voluminöser Oligomerenschaum mittels einer Düsenplatte mit einer oder mehreren Bohrungen, die einen relativ großen Durchmesser aufweisen, in ein inertisiertes Volumen erfolgen. Der nach Abkühlen spröde Schaum kann einfach in einem mechanischen Aggregat wie Brecher oder Mühle beliebig zerkleinert werden.

Der Austrag in ein inertisiertes Volumen bewirkt, dass ein Teil des in den Oligomerschmelzen gelösten Wassers schlagartig verdampft und das Oligomer sich hierbei abkühlt. Dadurch fallen die Oligomere in fester, weitgehend kristallisierter Form an. Die Oligomere können feinteilig als mehr oder weniger kompakte Teilchen aber auch als poröse lockere Flocken oder unregelmäßige feste Gebilde erhalten werden. Die erhaltenen Oligomere können, gegebenenfalls nach weiterer mechanischer Zerkleinerung und/oder Trocknung, auf geeignete Weise gefördert, gegebenenfalls wieder aufgeschmolzen und einem geeigneten weiteren Verfahren zugeführt werden, in dem aus ihnen höhermolekulare Polyamide hergestellt werden.

In einer Ausführungsform des erfindungsgemäßen Verfahrens wird die Oligomer-Schmelze unter dem eigenen Wasserdampfpartialdruck über eine Einstoffdüse ausgetragen. Dem Fachmann sind geeignete Düsengeometrien bekannt. Die Einstoffdüse kann unter anderem als einfache Bohrung, als Bohrung mit Prallkörper oder als Lavall-Düse ausgestaltet sein. In einer bevorzugten Ausführungsform wird eine Einstoffdüse mit einer einfachen Bohrung mit einem Durchmesser von 0,1 bis 10 mm, besonders bevorzugt von 0,5 bis 5 mm, ganz besonders bevorzugt von 2 bis 4 mm, verwendet. In einer weiteren bevorzugten Ausführungsform wird eine Einstoffdüse mit Prallkörper mit einem Durchmesser von 0,1 bis 10 mm, besonders bevorzugt von 0,5 bis 5 mm, ganz besonders bevorzugt von 2 bis 4 mm, verwendet.

In einer Ausführungsform des erfindungsgemäßen Verfahrens wird die Oligomer-Schmelze unter dem eigenen Wasserdampfpartialdruck und über separat zugespeistes Trägergas über eine Zweistoffdüse ausgetragen. Das separat zugespeiste Trägergas kann beispielsweise Stickstoff, Wasserdampf oder befeuchteter Stickstoff sein. Die Zweistoffdüse kann mit einem Ringspalt oder mit auf einer Kreisbahn liegenden seriellen Auslassöffnungen für das Trägergas ausgeführt sein, der/die um den zentralen Auslass der Oligomer-Schmelze angebracht ist/sind. In einer bevorzugten Ausführungsform wird eine Zweistoffdüse verwendet, bei der die innere Bohrung einen Durchmesser von 0,1 bis 10 mm, besonders bevorzugt von 0,5 bis 5 mm, ganz besonders bevorzugt von 2 bis 4 mm, aufweist und von einem Ringspalt der Dicke 0,1 bis 5 mm, besonders bevorzugt von 0,5 bis 2 mm, ganz besonders bevorzugt von 1 bis 2 mm, umgeben ist. In einer weiteren bevorzugten Ausführungsform wird eine Lavall-Zweistoffdüse eingesetzt, deren Öffnung einem Paraboloid-Abschnitt entspricht.

Der Austrag in ein inertisiertes Volumen bezeichnet hierbei einen eventuell gekühlten Zyklon oder Sprühturm oder ein vergleichbares Aggregat. Der Sprühaustrag in ein inertisiertes Volumen wird vorzugsweise in Apparaten durchgeführt, die auch zur Sprühtrocknung geeignet sind. Derartige Apparate werden beispielsweise in K. Masters, Spray Drying Handbook, 5th Edition, Longman, 1991, S. 23-66, beschrieben.

Im erfindungsgemäßen Verfahren können eine oder mehrere Sprühdüsen eingesetzt werden, wobei ihnen das zu versprühende Fluid unter Druck, in der Regel unter dem zweiten Druck p2, zugeführt wird. Die Zerteilung des zu versprühenden Fluids kann dabei dadurch erfolgen, dass sie nach Erreichen einer bestimmten Mindestgeschwindigkeit in der Düsenbohrung entspannt wird. Für den erfindungsgemäßen Zweck können auch Einstoffdüsen, wie beispielsweise Schlitzdüsen oder Drallkammern bzw. Vollkegeldüsen, verwendet werden (beispielsweise von der Firma Düsen-Schlick GmbH, Deutschland, oder von der Firma Spraying Systems Deutschland GmbH, Deutschland).

Die Bezeichnung inertisiertes Volumen kann auch Apparate umfassen, in denen die Oligomer-Mischung in Form von Tropfen frei in Inertatmosphäre fallen kann. Geeignet dazu sind Apparaturen, wie sie beispielsweise die US 5,269,980 beschreibt.

Eine Tropfenerzeugung durch laminaren Strahlzerfall, wie in Rev. Sci. Instr. 38 (1966) 502 beschrieben, ist ebenfalls möglich.

Die Tropfen können aber auch mittels pneumatischer Ziehdüsen, Rotation, Zerschneiden eines Strahls oder schnell ansteuerbarer Mikroventildüsen erzeugt werden. In einer pneumatischen Ziehdüse wird ein Flüssigkeitsstrahl zusammen mit einem Gasstrom durch eine Blende beschleunigt. Über die Gasmenge kann der Durchmesser des Flüssigkeitsstrahls und damit der Tropfendurchmesser beeinflusst werden.

Bei einer Tropfenerzeugung durch Rotation tritt die Flüssigkeit durch die Öffnungen einer rotierenden Scheibe. Durch die auf die Flüssigkeit wirkende Fliehkraft werden Tropfen definierter Größe abgerissen. Bevorzugte Vorrichtungen zur Rotationsvertropfung werden beispielsweise in DE 43 08 842 A1 beschrieben. Der austretende Flüssigkeitsstrahl kann aber auch mittels eines rotierenden Messers in definierte Segmente zerschnitten werden. Jedes Segment bildet anschließend einen Tropfen. Bei Verwendung von Mikroventildüsen werden direkt Tropfen mit definiertem Flüssigkeitsvolumen erzeugt.

Sollen zum Ende des kontinuierlichen Verfahrens die Oligomere so aus der Oligomerisierungszone ausgetragen werden, dass sie schmelzeflüssig anfallen und direkt in ein Verfahren zur Herstellung höhermolekularer Polyamide überführt werden können, ist eine nachfolgende Kombination aus Verdampferreaktor und Abscheider vorteilhaft. Da in diesen Aggregaten die Reaktion jedoch bereits Umsätze erreichen kann, die Molmassen oberhalb der definierten Oligomere entsprechen, wird der Abschluss des erfindungsgemäßen Verfahrens mit dem kontinuierlichen Austrag der Oligomer-Schmelze aus dem letzten Oligomerisierungs-Aggregat definiert. Ein solcher kontinuierlicher Austrag kann beispielsweise mittels Pumpen und in doppelwandig beheizten Rohrleitungen erfolgen. Geeignete Pumpen für Oligomerenschmelzen sind beispielsweise Spinnpumpen.

Sollen zum Ende des kontinuierlichen Verfahrens die Oligomere so aus der Oligomerisierungszone ausgetragen werden, dass sie kontinuierlich, aber ohne Isolierung der Oligomere in den nächsten Verfahrensabschnitt überführt werden, unabhängig davon, ob sie intermediär ganz oder teilweise als Feststoff anfallen oder nicht, so ist ein Sprühaustrag mit Hilfe oben beschriebener Düsen in ein inertisiertes Volumen bevorzugt. Das Oligomere wird am Fuße des Sprühvolumens gesammelt und mit Hilfe geeigneter Fördereinrichtungen ausgetragen.

Hierbei fällt je nach Ausgestaltung des Sprühvolumens und den physikalischen Bedingung während des Austrags, insbesondere Temperatur und Wasserdampfpartialdruck im inertisierten Volumen, das Oligomer unterschiedlich am Fuß des Sprühvolumens an: Kühlen sich Oligomertröpfchen beispielsweise durch verdampfendes Wasser deutlich ab und erstarren, so kann das Oligomer aus dem Fuß des Sprühvolumens mit Hilfe geeigneter kontinuierlicher Feststoffförderungsaggregate weitertransportiert werden. Erwärmen sich die Oligomertröpfchen trotz des verdampfenden Wassers während des Falls oder im Fuß des Sprühvolumens auf Temperaturen beispielsweise oberhalb des Schmelzpunktes des Oligomers, so kann kontinuierlich eine Schmelze mittels geeigneter Aggregate ausgetragen werden. Liegen die Bedingungen des Sprühaustrags zwischen diesen beiden Grenzen, so kann das Oligomer am Fuß des Sprühvolumens als pappige Mischung aus Feststoff und Schmelze anfallen und beispielsweise mittels beheizter Extruderschnecken weitergefördert werden.

Ein weiteres Beispiel für eine solche Ausführungsform ist der Austrag aus der Oligomerisierungszone unter kompletter bzw. teilweiser Entspannung direkt in einen Extruder, in dem die weitere Kondensationsreaktion zu einem Polymer durchgeführt wird. In diesem Falle sind Extruder bevorzugt, die eine hohe Entgasungsleistung realisieren können, z.B. Zweischneckenextruder, Planetwalzenextruder oder Ringextruder. Die ggf. als Feststoff anfallenden Oligomere werden ohne weitere Isolierung direkt wieder aufgeschmolzen und im Extruder unter Wahl einer geeigneten Temperatur und Verweilzeit schmelzekondensiert.

In einem weiteren erfindungsgemäßen Verfahren werden ausgehend von den Oligomeren die höhermolekularen, teilkristallinen oder amorphen, thermoplastisch verarbeitbaren Polyamide hergestellt. Das Verfahren umfasst ein kontinuierliches Bereitstellen einer Mischung, die Wasser und das Polyamid-Oligomer enthält und eine Nachkondensation des Polyamid-Oligomers zu einem Polyamid. Die Mischung wird bevorzugt kontinuierlich nach dem voranstehend beschriebenen Verfahren zur Herstellung eines Polyamid-Oligomers erhalten und weist dann die im letzten Oligomerisierungs-Aggregat benannte zweite Oligomerisierungstemperatur OT2 und den zweiten Druck p2 auf.

Die erfindungsgemäßen und nach dem erfindungsgemäßen Verfahren erhaltenen aliphatischen Polyamide weisen vorzugsweise ein zahlenmittleres Molekulargewicht Mₙ in einem Bereich von 13000 bis 28000 g/mol auf. Die Angaben des zahlenmittleren Molekulargewichts Mₙ und des gewichtsmittleren Molekulargewichts M_{w} im Rahmen dieser Erfindung beziehen sich auf eine Bestimmung mittels Gelpermeationschromatographie (GPC). Zur Kalibrierung wurde PMMA als Polymerstandard mit einer niedrigen Polydispersität eingesetzt.

Die erfindungsgemäßen und nach dem erfindungsgemäßen Verfahren erhaltenen teilaromatischen Polyamide weisen vorzugsweise ein zahlenmittleres Molekulargewicht Mₙ in einem Bereich von 13000 bis 25000 g/mol, besonders bevorzugt von 15000 bis 20000 g/mol, auf.

Die erfindungsgemäßen und nach dem erfindungsgemäßen Verfahren erhaltenen aliphatischen Polyamide weisen vorzugsweise ein gewichtsmittleres Molekulargewicht M_{w} in einem Bereich von 20000 bis 140000 g/mol auf.

Die erfindungsgemäßen und nach dem erfindungsgemäßen Verfahren erhaltenen teilaromatischen Polyamide weisen vorzugsweise ein gewichtsmittleres Molekulargewicht M_{w} in einem Bereich von 25000 bis 125000 g/mol auf.

Die erfindungsgemäßen und nach dem erfindungsgemäßen Verfahren erhaltenen aliphatischen und teilaromatischen Polyamide weisen vorzugsweise eine Polydispersität PD (= M_{w}/Mₙ) von höchstens 6, besonders bevorzugt von höchstens 5, insbesondere von höchstens 3,5, auf.

Die nach dem zweiten erfindungsgemäßen Verfahren aus Oligomeren zugänglichen aliphatischen und teilaromatischen Polyamide können zur Herstellung von Formteilen mittels beliebiger geeigneter Verarbeitungstechniken verwendet werden. Geeignete Verarbeitungstechniken sind insbesondere Spritzgießen, Mehrkomponenten-Spritzgießen, Spritzgießschweißen, Extrusion, Coextrusion, Blasformen und Tiefziehen. Zu diesem Zweck können den genannten Polyamiden Verstärkungsmittel und Füllstoffe wie Glasfasern, Kohlefasern, mineralische Verstärkungs- und Füllstoffe sowie andere Modifizierungsmittel, beispielsweise flammhemmende Additive oder Antistatika, zugesetzt werden.

Die nach dem erfindungsgemäßen Verfahren erhältlichen aliphatischen Polyamide eignen sich insbesondere zur Herstellung von Folien, Monofilamenten, Fasern, Garnen oder textilen Flächengebilden. Dabei erweisen sich die erfindungsgemäß hergestellten aliphatischen Polyamide in der Regel als besonders verarbeitungsstabil während einer Schmelzextrusion durch Breitschlitz- oder ringförmige Düsen zu Flach- oder Blasfolien sowie durch ringförmige Düsen kleineren Durchmessers zu Monofilamenten.

Die nach dem erfindungsgemäßen Verfahren erhältlichen teilaromatischen Polyamide verfügen ebenfalls über vorteilhafte Eigenschaften.

Das erfindungsgemäße und nach dem erfindungsgemäßen Verfahren erhaltene teilaromatische Polyamid weist vorzugsweise einen Gelgehalt von höchstens 5 Gew.-%, bezogen auf das Gesamtgewicht des Polyamids, auf.

Das erfindungsgemäße und nach dem erfindungsgemäßen Verfahren erhaltene teilaromatische Polyamid weist vorzugsweise eine Viskositätszahl von 80 bis 120 ml/g auf. Die Viskositätszahl (Staudinger-Funktion, bezeichnet mit VZ, VN oder J) ist definiert als VZ = 1 / c x ( 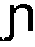 - 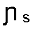 ) / 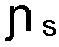 . Die Viskositätszahl steht in direkter Beziehung zur mittleren molaren Masse des Polyamids und gibt Auskunft über die Verarbeitbarkeit eines Kunststoffes. Die Bestimmung der Viskositätszahl kann nach EN ISO 307 mit einem Ubbelohde-Viskosimeter erfolgen.

### Polyamid-Formmasse

Die Annmeldung offenbart im Folgenden eine Polyamid-Formmasse, die wenigstens ein erfindungsgemäß hergestelltes teilaromatisches Copolyamid enthält.

Bevorzugt ist eine Polyamid-Formmasse, enthaltend:
A) 25 bis 100 Gew.-% wenigstens eines teilaromatischen Copolyamids, wie zuvor definiert,
B) 0 bis 75 Gew.-% wenigstens eines Füll- und Verstärkungsstoffs,
C) 0 bis 50 Gew.-% wenigstens eines Additivs,
wobei die Komponenten A) bis C) zusammen 100 Gew.-% ergeben.

Der Begriff "Füllstoff und Verstärkungsstoff" (= Komponente B) wird im Rahmen der Erfindung breit verstanden und umfasst partikulare Füllstoffe, Faserstoffe und beliebige Übergangsformen. Partikuläre Füllstoffe können eine weite Bandbreite von Teilchengrößen aufweisen, die von staubförmigen bis grobkörnigen Partikeln reichen. Als Füllmaterial kommen organische oder anorganische Füll- und Verstärkungsstoffe in Frage. Beispielsweise können anorganische Füllstoffe, wie Kaolin, Kreide, Wollastonit, Talkum, Calciumcarbonat, Silikate, Titandioxid, Zinkoxid, Graphit, Glaspartikel, z. B. Glaskugeln, nanoskalige Füllstoffe, wie Kohlenstoff-Nanoröhren (carbon nanotubes), carbon black, nanoskalige Schichtsilikate, nanoskaliges Aluminiumoxid (Al₂O₃), nanoskaliges Titandioxid (TiO₂), Graphen, dauerhaft magnetische bzw. magnetisierbare Metallverbindungen und/oder Legierungen, Schichtsilikate und nanoskaliges Siliciumdioxid (SiO₂), eingesetzt werden. Die Füllstoffe können auch oberflächenbehandelt sein.

Als Schichtsilikate können in den erfindungsgemäß hergestellten Formmassen z. B. Kaoline, Serpentine, Talkum, Glimmer, Vermiculite, Illite, Smectite, Montmorillonit, Hectorit, Doppelhydroxide oder Gemische davon eingesetzt werden. Die Schichtsilikate können oberflächenbehandelt oder unbehandelt sein.

Weiterhin können ein oder mehrere Faserstoffe zum Einsatz kommen. Diese sind vorzugsweise ausgewählt aus bekannten anorganischen Verstärkungsfasern, wie Borfasern, Glasfasern, Kohlenstofffasern, Kieselsäurefasern, Keramikfasern und Basaltfasern; organischen Verstärkungsfasern, wie Aramidfasern, Polyesterfasern, Nylonfasern, Polyethylenfasern und Naturfasern, wie Holzfasern, Flachsfasern, Hanffasern und Sisalfasern.

Insbesondere bevorzugt ist der Einsatz von Glasfasern, Kohlenstofffasern, Aramidfasern, Borfasern, Metallfasern oder Kaliumtitanatfasern.

Speziell werden Schnittglasfasern eingesetzt. Insbesondere umfasst die Komponente B) Glas- und/oder Kohlenstofffasern, wobei bevorzugt Kurzfasern eingesetzt werden. Diese weisen vorzugsweise eine Länge im Bereich von 2 bis 50 mm und einem Durchmesser von 5 bis 40 □m auf. Alternativ können Endlosfasern (Rovings) eingesetzt werden. Geeignet sind Fasern mit kreisförmiger und/oder nicht-kreisförmiger Querschnittsfläche, wobei im letzteren Fall das Abmessungsverhältnis von der Hauptquerschnittsachse zur Nebenquerschnittsachse insbesondere > 2 ist, bevorzugt im Bereich von 2 bis 8 und besonders bevorzugt im Bereich von 3 bis 5 liegt.

In einer speziellen Ausführung umfasst die Komponente B) sogenannte "flache Glasfasern". Diese weisen speziell eine ovale oder elliptische oder eine mit Einschnürung(en) versehene elliptische (sog. "Kokon"-oder "cocoon"-Faser) oder rechteckige oder nahezu rechteckige Querschnittsfläche auf. Dabei werden Glasfasern mit nicht-kreisförmiger Querschnittsfläche und einem Abmessungsverhältnis von der Hauptquerschnittsachse zur Nebenquerschnittsachse von mehr als 2, bevorzugt von 2 bis 8, insbesondere von 3 bis 5, bevorzugt eingesetzt.

Zur Verstärkung der erfindungsgemäß hergestellten Formmassen können auch Mischungen von Glasfasern mit kreisförmigem und nicht-kreisförmigem Querschnitt verwendet werden. In einer speziellen Ausführung überwiegt der Anteil an flachen Glasfasern, wie oben definiert, d. h. sie machen mehr als 50 Gew.-% der Gesamtmasse der Fasern aus.

Wenn als Komponente B) Rovings von Glasfasern eingesetzt werden, weisen diese vorzugsweise einen Durchmesser von 10 bis 20 □m, bevorzugt von 12 bis 18 □m, auf. Dabei kann der Querschnitt der Glasfasern rund, oval, elliptisch, nahezu rechteckig oder rechteckig sein. Besonders bevorzugt werden sogenannte flache Glasfasern mit einem Verhältnis der Querschnittsachsen von 2 bis 5. Insbesondere werden E-Glasfasern verwendet. Es können aber auch alle anderen Glasfasersorten, wie z. B. A-, C-, D-, M-, S-, R-Glasfasern oder beliebige Mischungen davon oder Mischungen mit E-Glasfasern eingesetzt werden.

Die erfindungsgemäß hergestellten Polyamid-Formmassen können durch die bekannten Verfahren zur Herstellung von langfaserverstärktem Stäbchengranulat hergestellt werden, insbesondere durch Pultrusionsverfahren, bei denen der endlose Faserstrang (Roving) mit der Polymerschmelze vollständig durchtränkt und anschließend abgekühlt und geschnitten wird. Das auf diese Art und Weise erhaltene langfaserverstärkte Stäbchengranulat, das bevorzugt eine Granulatlänge von 3 bis 25 mm, insbesondere von 4 bis 12 mm, aufweist, kann mit den üblichen Verarbeitungsverfahren, wie z. B. Spritzgießen oder Pressen, zu Formteilen weiterverarbeitet werden.

Die erfindungsgemäß hergestellte Polyamid-Formmasse enthält bevorzugt 25 bis 75 Gew.-%, besonders bevorzugt 33 bis 60 Gew.-%, mindestens eines Füll- und Verstärkungsstoffs B), bezogen auf das Gesamtgewicht der Polyamid-Formmasse.

Geeignete Additive C) sind Wärmestabilisatoren, Flammschutzmittel, Lichtschutzmittel (UV-Stabilisatoren, UV-Absorber oder UV-Blocker), Gleitmittel, Farbstoffe, Nukleierungsmittel, metallische Pigmente, Metallflitter, metallbeschichtete Partikel, Antistatika, Leitfähigkeitsadditive, Entformungsmittel, optische Aufheller, Entschäumer, etc.

Als Komponente C) enthalten die erfindungsgemäß hergestellten Formmassen vorzugsweise 0,01 bis 3 Gew.-%, besonders bevorzugt 0,02 bis 2 Gew.-%, insbesondere 0,1 bis 1,5 Gew.-% mindestens eines Wärmestabilisators.

Bevorzugt sind die Wärmestabilisatoren ausgewählt unter Kupferverbindungen, sekundären aromatischen Aminen, sterisch gehinderten Phenolen, Phosphiten, Phosphoniten und Mischungen davon.

Sofern eine Kupferverbindung verwendet wird, beträgt vorzugsweise die Menge an Kupfer 0,003 bis 0,5, insbesondere 0,005 bis 0,3 und besonders bevorzugt 0,01 bis 0,2 Gew.-%, bezogen auf die Summe der Komponenten A) bis C).

Sofern Stabilisatoren auf Basis sekundärer aromatischer Amine verwendet werden, beträgt die Menge an diesen Stabilisatoren vorzugsweise 0,2 bis 2 Gew.-%, besonders bevorzugt von 0,2 bis 1,5 Gew.-%, bezogen auf die Summe der Komponenten A) bis C).

Sofern Stabilisatoren auf Basis sterisch gehinderter Phenole verwendet wird, beträgt die Menge an diesen Stabilisatoren vorzugsweise 0,1 bis 1,5 Gew.-%, besonders bevorzugt von 0,2 bis 1 Gew.-%, bezogen auf die Summe der Komponenten A) bis C).

Sofern Stabilisatoren auf Basis von Phosphiten und/oder Phosphoniten verwendet werden, beträgt die Menge an diesen Stabilisatoren vorzugsweise 0,1 bis 1,5 Gew.-%, besonders bevorzugt von 0,2 bis 1 Gew.-%, bezogen auf die Summe der Komponenten A) bis C).

Geeignete Verbindungen C) des ein- oder zweiwertigen Kupfers sind z. B. Salze des ein- oder zweiwertigen Kupfers mit anorganischen oder organischen Säuren oder ein- oder zweiwertigen Phenolen, die Oxide des ein- oder zweiwertigen Kupfers oder die Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren. Besonders bevorzugt sind die einwertigen Kupferverbindungen CuCl, CuBr, Cul, CuCN und Cu₂O sowie die zweiwertigen Kupferverbindungen CuCl₂, Cu-SO₄, CuO, Kupfer(II)acetat oder Kupfer(Il)stearat.

Die Kupferverbindungen sind handelsüblich bzw. ihre Herstellung ist dem Fachmann bekannt. Die Kupferverbindung kann als solche oder in Form von Konzentraten eingesetzt werden. Unter Konzentrat ist dabei ein Polymer, vorzugsweise von gleicher chemischer Natur wie die Komponente A), zu verstehen, welches das Kupfersalz in hoher Konzentration enthält. Der Einsatz von Konzentraten ist ein übliches Verfahren und wird besonders häufig dann angewandt, wenn sehr geringe Mengen eines Einsatzstoffes zu dosieren sind. Vorteilhafterweise werden die Kupferverbindungen in Kombination mit weiteren Metallhalogeniden, insbesondere Alkalihalogeniden, wie Nal, Kl, NaBr, KBr, eingesetzt, wobei das molare Verhältnis von Metallhalogenid zu Kupferhalogenid 0,5 bis 20, bevorzugt 1 bis 10 und besonders bevorzugt 3 bis 7, beträgt.

Besonders bevorzugte Beispiele für erfindungsgemäß einsetzbare Stabilisatoren auf Basis sekundärer aromatischer Amine sind Addukte aus Phenylendiamin mit Aceton (Naugard A), Addukte aus Phenylendiamin mit Linolensäure, 4,4'-Bis(α,α-dimethylbenzyl)diphenylamin (Naugard ^{®} 445), N,N'-Dinaphthyl-p-phenylendiamin, N-Phenyl-N'-cyclohexyl-p-phenylendiamin oder Mischungen von zwei oder mehreren davon. Bevorzugte Beispiele für erfindungsgemäß einsetzbare Stabilisatoren auf Basis sterisch gehinderter Phenole sind N,N'-Hexamethylen-bis-3-(3,5-di-tert-butyl-4-hydroxyphenyl)-propionamid, Bis-(3,3-bis-(4'-hydroxy-3'-tert-butylphenyl)-butansäure)-glykolester, 2,1'-Thioethylbis-(3-(3,5-di.tert-butyl-4-hydroxyphenyl)-propionat, 4,4'-Butyliden-bis-(3-methyl-6-tert.-butylphenol), Triethylenglykol-3-(3-tert-butyl-4-hydroxy-5-methylphenyl)-propionat oder Mischungen von zweien oder mehreren dieser Stabilisatoren.

Bevorzugte Phosphite und Phosphonite sind Triphenylphosphit, Diphenylalkylphosphit, Phenyldialkylphosphit, Tris(nonylphenyl)phosphit, Trilaurylphosphit, Trioctadecylphosphit, Distearylphentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,6-di-tert-butyl-4-methylphenyl)-pentaerythritoldiphosphit, Diisodecyloxypentaerythritoldiphosphit, Bis(2,4-di-tert-butyl-6-methylphenyl)pentaerythritoldiphosphit, Bis(2,4,6-tris-(tert-butylphenyl))pentaerythritoldiphosphit, Tristearylsorbitoltriphosphit, Tetrakis-(2,4-di-tert-butylphenyl)-4,4'-biphenylendiphosphonit, 6-Isooctyloxy-2,4,8,10-tetra-tert-butyl-12H-dibenz-[d,g]-1,3,2-dioxaphosphocin, 6-Fluoro-2,4,8,10-tetra-tert-butyl- 12-methyl-dibenz[d,g]-1,3,2-dioxaphosphocin, Bis(2,4-di-tert- butyl-6-methylphenyl)methylphosphit und Bis(2,4-di-tert-butyl-6-methylphenyl)ethylphosphit. Insbesondere werden bevorzugt Tris[2-tert-butyl-4-thio(2'-methyl-4'-hydroxy-5'-tert-butyl)-phenyl-5-methyl]phenylphosphit und Tris(2,4-di-tert-butylphenyl)phosphit (Hostanox ^{®} PAR24: Handelsprodukt der Firma BASF SE).

Eine bevorzugte Ausführungsform des Wärmestabilisators besteht in der Kombination von organischen Hitzestabilisatoren (insbesondere Hostanox PAR 24 und Irganox 1010), einem Bisphenol A basiertem Epoxid (insbesondere Epikote 1001) und einer Kupferstabilisierung auf Basis von Cul und Kl. Eine kommerziell erhältliche Stabilisatormischung, bestehend aus organischen Stabilisatoren und Epoxiden ist beispielsweise Irgatec NC66 von BASF SE. Insbesondere bevorzugt wird eine Wärmestabilisierung ausschließlich auf Basis von Cul und Kl. Neben dem Zusatz von Kupfer oder Kupferverbindungen wird die Verwendung weiterer Übergangsmetallverbindungen, insbesondere Metallsalze oder Metalloxide der Gruppe VB, VIB, VIIB oder VIIIB des Periodensystems, ausgeschlossen. Darüber hinaus werden der erfindungsgemäß hergestellten Formmasse bevorzugt keine Übergangsmetalle der Gruppe VB, VIB, VIIB oder VIIIB des Periodensystems, wie z. B. Eisen- oder Stahlpulver, zugesetzt.

Die erfindungsgemäß hergestellten Formmassen enthalten vorzugsweise 0 bis 30 Gew.-%, besonders bevorzugt 0 bis 20 Gew.-%, bezogen auf das Gesamtgewicht der Komponenten A) bis C), mindestens eines Flammschutzmittels als Additiv C). Wenn die erfindungsgemäß hergestellten Formmassen mindestens ein Flammschutzmittel enthalten, so vorzugsweise in einer Menge von 0,01 bis 30 Gew.-%, besonders bevorzugt von 0,1 bis 20 Gew.-%, bezogen auf das Gesamtgewichten der Komponenten A) bis C). Als Flammschutzmittel C) kommen halogenhaltige und halogenfreie Flammschutzmittel und deren Synergisten in Frage (siehe auch Gächter/Müller, 3. Ausgabe 1989 Hanser Verlag, Kapitel 11). Bevorzugte halogenfreie Flammschutzmittel sind roter Phosphor, Phosphinsäure- oder Diphosphinsäuresalze , und/oder stickstoffhaltige Flammschutzmittel wie Melamin, Melamincyanurat, Melaminsulfat, Melaminborat, Melaminoxalat, Melaminphosphat (prim, sec.) oder sec. Melaminpyrophosphat, Neopentylglycolborsäuremelamin, Guanidin und dem Fachmann bekannte Derivate davon, sowie polymeres Melaminphosphat (CAS Nr.: 56386-64-2 bzw. 218768-84-4 sowie EP 1095030), Ammoniumpolyphosphat, Trishydroxyethylisocyanurat (gegebenenfalls auch Ammoniumpolyphosphat in Mischung mit Trishydroxyethylisocyanurat) (EP 584567). Weitere N-haltige oder P-haltige Flammschutzmittel oder als Flammschutzmittel geeignete PN-Kondensate können der DE 10 2004 049 342 entnommen werden, ebenso die hierfür üblichen Synergisten wie Oxide oder Borate. Geeignete halogenhaltige Flammschutzmittel sind z.B. oligomere bromierte Polycarbonate (BC 52 Great Lakes) oder Polypentabrombenzylacrylate mit N größer 4 (FR 1025 Dead sea bromine), Umsetzungsprodukte aus Tetrabrom-bis-phenol-A mit Epoxiden, bromierte oligomere oder polymere Styrole, Dechloran, welche meist mit Antimonoxiden als Synergisten eingesetzt werden (Für Einzelheiten und weitere Flammschutzmittel: siehe DE-A-10 2004 050 025).

Als Antistatika können in den erfindungsgemäß hergestellten Formmassen z. B. Ruß und/oder Kohlenstoffnanoröhrchen eingesetzt werden. Die Verwendung von Ruß kann aber auch zur Verbesserung der Schwarzfärbung der Formmasse dienen. Die Formmasse kann jedoch auch frei von metallischen Pigmenten sein.

### Formkörper

Des Weiteren beschreibt die vorliegende Anmeldung Formkörper, die unter Verwendung von den erfindungsgemäß hergestellten Copolyamiden bzw. Polyamid-Formmassen hergestellt werden.

Die erfindungsgemäß hergestellten teilaromatischen Polyamide eignen sich vorteilhaft für eine Verwendung zur Herstellung von Formteilen für Elektro- und Elektronikbauteilen und für Automobil-Anwendungen im Hochtemperaturbereich.

Eine spezielle Ausführungsform sind Formkörper in Form oder als Teil eines Bauteils für den Automobilbereich, insbesondere ausgewählt unter Zylinderkopfhauben, Motorabdeckungen, Gehäusen für Ladeluftkühler, Ladeluftkühlerklappen, Ansaugrohren, Ansaugkrümmern, Konnektoren, Zahnrädern, Lüfterrädern, Kühlwasserkästen, Gehäusen oder Gehäuseteilen für Wärmetauscher, Kühlmittelkühlern, Ladeluftkühlern, Thermostaten, Wasserpumpen, Heizkörpern, Befestigungsteilen.

Eine weitere spezielle Ausführungsform sind Formkörper als oder als Teil eines elektrischen oder elektronischen passiven oder aktiven Bauteils, einer Leiterplatte, eines Teils einer Leiterplatte, eines Gehäusebestandteils, einer Folie, einer Leitung, insbesondere in Form oder als Teil eines Schalters, eines Steckers, einer Buchse, eines Verteilers, eines Relais, eines Widerstandes, eines Kondensators, einer Spule oder eines Spulenkörpers, einer Lampe, einer Diode, einer LED, eines Transistors, eines Konnektors, eines Reglers, eines integrierten Schaltkreises (IC), eines Prozessors, eines Controllers, eines Speichers und/oder eines Sensors.

Die erfindungsgemäß hergestellten teilaromatischen Polyamide eignen sich weiterhin speziell für den Einsatz in Lötprozessen unter bleifreien Bedingungen (lead free soldering), zur Herstellung von Steckverbindern, Mikroschaltern, Mikrotastern und Halbleiterbauteilen, insbesondere Reflektorgehäusen von Leuchtdioden (LED).

Eine spezielle Ausführungsform sind Formkörper als Befestigungselemente elektrischer oder elektronischer Bauteile, wie Abstandshalter, Bolzen, Leisten, Einschubführungen, Schrauben und Muttern.

Insbesondere bevorzugt ist ein Formteil in Form oder als Teil eines Sockels, eines Steckverbinders, eines Steckers oder einer Buchse. Bevorzugt beinhaltet das Formteil Funktionselemente, die eine mechanische Zähigkeit erfordern. Beispiele solcher Funktionselemente sind Filmscharniere, Schnapphaken (Snap-in) und Federzungen.

Im Autoinnenraum ist eine Verwendung für Armaturentafeln, Lenkstockschalter, Sitzteile, Kopfstützen, Mittelkonsolen, Getriebe-Komponenten und Türmodule, im Autoaußenraum für Türgriffe, Außenspiegelkomponenten, Scheibenwischerkomponenten, Scheibenwischerschutzgehäuse, Ziergitter, Dachreling, Schiebedachrahmen, Motorabdeckungen, Zylinderkopfhauben, Ansaugrohre, Scheibenwischer sowie Karosserieaußenteile möglich.

Für den Küchen- und Haushaltsbereich ist der Einsatz fließverbesserter Polyamide zur Herstellung von Komponenten für Küchengeräte, wie z. B. Fritteusen, Bügeleisen, Knöpfe, sowie Anwendungen im Garten-Freizeitbereich, z. B. Komponenten für Bewässerungssysteme oder Gartengeräte und Türgriffe, möglich.

### Beispiele

### Allgemeine Beschreibung der verwendeten Apparatur (Beispiele 1-3) :

In einem 20 I Doppelmantel-Rührkessel (Edelstahl) wird die Aminkomponente in wässriger Lösung vorgelegt und die Säurekomponenten sowie Katalysator, Regler und andere Einsatzstoffe zugegeben, und mit VE-Wasser nachgespült und der Kessel durch dreimaliges Aufdrücken von Stickstoff inertisiert.

Die Reaktionsmischung wird auf 140 °C aufgeheizt, wobei sich ein Druck von ca. 4 bar einstellt und so lange unter Rühren gehalten, bis eine klare Monomerlösung erhalten wird (ca. 90 Minuten). Anschließend wird die Monomerlösung unter Beibehaltung von Druck und Temperatur in ein Vorratsgefäß überführt, das für die kontinuierliche Versorgung des Verfahrens geeignet ist. Die Monomerenlösung wird mittels einer Pumpe kontinuierlich in einen Wärmetauscherreaktor (OT1), bestehend aus einem 3-teiligen Rohrbündelreaktor mit 13 Rohren mit je 0,6 m Länge und 13 mm Innendurchmesser, gepumpt. Die Pumpleistung wird so angepasst, dass die gewünschte Verweilzeit im Rohrbündelreaktor bei der angegeben Temperatur sowie Druck erreicht wird. Der Rohrbündelreaktor verfügt über zwei Heizzonen, die jeweils über einen Wärmetauscher separat beheizt werden können. Der Rohrbündelreaktor ist mit einem 2 I Doppelmantel-beheizten Druckreaktor (OT2) verbunden, der über ein Druckregelventil sowie einen Bodenauslass verfügt. Die Beheizung des Druckreaktors wird so eingestellt, dass die gewünschte Innentemperatur erreicht wird. Der gewünschte Druck wird über das Druckventil eingestellt. Um ein zu starkes Abkühlen der Lösung durch das Verdampfen von Wasser zu vermeiden, kann der Reaktionslösung über einen zusätzlichen Wärmetauscher vor dem Druckreaktor zusätzlich Wärme zugeführt werden. Über den Bodenauslass wird kontinuierlich die klare Oligomerenlösung ausgetragen, dabei ist die Austragsgeschwindigkeit so zu wählen ist, dass die gewünschte Verweilzeit realisiert wird.

### Beispiel 1:

PA6T/6I - Isolierung als Feststoff mit nachfolgender Festphasenkondensation: Einsatzstoffe:
4,943 kg Terephthalsäure
2,118 kg Isophthalsäure
7,268 kg Hexamethylendiamin (70 % wässrige Lösung)
3,026 kg VE Wasser
4,0 g Natriumhypophosphit
30,0 g Essigsäure
OT: Oligomerisierungsteil:

| OT1 | t1 | p1 | OT2 | t2 | p2 |
|---|---|---|---|---|---|
| 240 °C | 1,5h | 3,5 MPa | 243 °C | 30 min | 2,7 MPa |

Der Austrag der Oligomerenlösung erfolgt kontinuierlich durch Entspannung der Oligomerenlösung aus dem Druckreaktor über ein Druckventil und Sprühdüse in einen geeigneten inertisierten Behälter, wobei die Oligomere als Feststoffe anfallen und der anfallende Wasserdampf abgetrennt wird. Der Feststoff wird anschließend unter Wasserdampf bei 260 °C im Autoklaven für 6 Stunden getempert, um das erfindungsgemäß herstellbare Polymer zu erhalten.

### Charakterisierung:

Oligomer: GPC (Kalibrierung mit PMMA-Standards): Mn: 1050 g/mol, PDI: 1,7
Polymer: GPC (Kalibrierung mit PMMA-Standards): Mn: 13400 g/mol, PDI: 3,2

### Beispiel 2:

PA6I/6T - Schmelzeflüssige Überführung in weiteren Kondensationsschritt:
4,119 kg Isophthalsäure
1,765 kg Terephthalsäure
6,233 kg Hexamethylendiamin (70% wässrige Lösung)
2,522 kg VE Wasser
3,25 g Natriumhypophosphit

| OT1-1, OT1-2 | t1 | p1 | OT2 | t2 | p2 |
|---|---|---|---|---|---|
| 230 °C, 240 °C | 2 h | 3,5 MPa | 240 °C | 40 min | 2,8 MPa |

Die wässrige Oligomerenlösung wird anschließend direkt mittels eines Wärmetauschers bei einem Druck von 20 bar auf eine Temperatur von 320 °C erhitzt und direkt zur Abtrennung des entstehenden Wasserdampfes in einen Abscheider bei 315 °C auf 6 bar entspannt. Nach einer Nachpolymerisationszeit von etwa 10 Minuten im Abscheider wird das Polymer ausgetragen.

### Charakterisierung:

Oligomer: GPC (Kalibrierung mit PMMA-Standards): Mn: 950 g/mol, PDI: 1,8
Polymer: GPC (Kalibrierung mit PMMA-Standards): Mn: 16200 g/mol, PDI: 2,5

### Beispiel 3:

PA66 - Schmelzeflüssige Überführung in weiteren Kondensationsschritt
10,500 kg AH-Salz (pH-Wert 7,71)
4,556 kg Wasser
3,5 g Natriumhypophosphit

| OT1 | t1 | p1 | OT2 | t2 | p2 |
|---|---|---|---|---|---|
| 250 °C | 1 h | 4,0 MPa | 240 °C | 20 min | 2,7 MPa |

Die wässrige Oligomerenlösung wird anschließend direkt mittels eines Wärmetauschers bei einem Druck von 30 bar auf eine Temperatur von 300 °C erhitzt und zur Abtrennung des entstehenden Wasserdampfes in einen Abscheider bei 295 °C auf 5 bar entspannt. Nach einer Nachpolymerisationszeit von etwa 18 Minuten im Abscheider wird das Polymer ausgetragen.

### Charakterisierung:

Oligomer: GPC (Kalibrierung mit PMMA-Standards): Mn: 890g/mol, PDI: 1,7
Polymer: GPC (Kalibrierung mit PMMA-Standards): Mn: 16300 g/mol, PDI: 2,5

## Patentansprüche

1. Verfahren zur kontinuierlichen Herstellung von Polyamid-Oligomeren, umfassend
- kontinuierliche Förderung einer wässrigen Lösung polyamidbildender Monomere aus einem Vorratsgefäß in einen Oligomerisierungsreaktor,
- Erwärmen der wässrigen Lösung über eine Löse- oder Lagerungstemperatur hinaus, wobei die Verweilzeit der Monomerenlösung im Oligomerisationsreaktor so begrenzt und der Druck oder der Partialdampfdruck des Wassers so eingestellt wird, dass ein Umsatz von Monomeren zu Polyamid-Oligomeren einen Maximalwert nicht überschreitet und/oder die entstehenden Polyamid-Oligomeren nicht als Feststoff phasenseparieren oder spontan kristallisieren, und
- kontinuierliches Austragen der Polyamid-Oligomeren aus dem Oligomerisationsreaktor.

2. Verfahren nach Anspruch 1, wobei die Polyamide bei ausschließlicher hydrolytischer Spaltung der Amidgruppen eine Zusammensetzung der folgenden Formel (I) ergeben
A1ₐ₁|B1₆₁|A2ₐ₂|B2₆₂|B3_{b3}|AXₐₓ|BY_{by}|AB_{ab}|A2B_{a2b}|AXBY_{axby} (I)
worin
A1 Einheiten bezeichnet, die sich von unsubstituierten oder substituierten Monocarbonsäuren oder ihren Derivaten ableiten,
A2 Einheiten bezeichnet, die sich von unsubstituierten oder substituierten Dicarbonsäuren oder ihren Derivaten ableiten,
AX Einheiten bezeichnet, die sich von Verbindungen mit einer Carboxylfunktionalität größer als zwei ableiten,
B1 Einheiten bezeichnet, die sich von monofunktionellen Aminen ableiten,
B2 Einheiten bezeichnet, die sich von Diaminen ableiten,
B3 Einheiten bezeichnet, die sich von Triaminen herleiten,
BY Einheiten bezeichnet, die sich von Verbindungen mit einer Aminofunktionalität größer als drei ableiten,
AB Einheiten bezeichnet, die sich von Aminocarbonsäuren ableiten,
A2B Einheiten bezeichnet, die sich von Aminodicarbonsäuren ableiten,
AXBY Einheiten bezeichnet, die sich von Verbindungen mit Amino- und Carboxylgruppen ableiten, wobei die Funktionalitäten X + Y größer als 2 sind,
mit der Maßgabe, dass die Summe aller Indices a1 + b1 + a2 + b2 + b3 + ax + by + ab + a2b + axby sich zu 100 mol% addiert.

3. Verfahren nach Anspruch 1 oder 2, wobei die polyamidbildenden Monomere ausgewählt sind unter
A) unsubstituierten oder substituierten aromatischen Dicarbonsäuren und Derivaten von unsubstituierten oder substituierten aromatischen Dicarbonsäuren,
B) unsubstituierten oder substituierten aromatischen Diaminen,
C) aliphatischen oder cycloaliphatischen Dicarbonsäuren,
D) aliphatischen oder cycloaliphatischen Diaminen,
E) Monocarbonsäuren,
F) Monoaminen,
G) mindestens dreiwertigen Aminen,
H) Lactamen,
I) ω -Aminosäuren, und
K) von A) bis I) verschiedenen, damit cokondensierbaren Verbindungen, und Mischungen davon.

4. Verfahren nach Anspruch 3, wobei in Schritt a) zur Bereitstellung der wässrigen Zusammensetzung mindestens eine der Komponenten A) oder B) vorhanden sein muss.

5. Verfahren nach einem der Ansprüche 3 oder 4, wobei als aromatische Dicarbonsäure A) Terephthalsäure, Isophthalsäure oder ein Gemisch aus Terephthalsäure und Isophthalsäure eingesetzt wird.

6. Verfahren nach einem der vorhergehenden Ansprüche, wobei das Polyamid ausgewählt ist unter PA 6.T, PA 9.T, PA8.T, PA 10.T, PA 12.T, PA 6.I, PA 8.I, PA 9.I, PA 10.I, PA 12.I, PA 6.T/6, PA 6.T/10, PA 6.T/12, PA 6.T/6.I, PA6.T/8.T, PA 6.T/9.T, PA 6.T/10T, PA 6.T/12.T, PA 12.T/6.T, PA 6.T/6.I/6, PA 6.T/6.I/12, PA 6.T/6.I/6.10, PA 6.T/6.I/6.12, PA 6.T/6.6, PA 6.T/6.10, PA 6.T/6.12, PA 10.T/6, PA 10.T/11, PA 10.T/12, PA 8.T/6.T, PA 8.T/66, PA 8.T/8.1, PA 8.T/8.6, PA 8.T/6.I, PA 10.T/6.T, PA 10.T/6.6, PA 10.T/10.I, PA 10T/10.I/6.T, PA 10.T/6.I, PA 4.T/4.I/46, PA 4.T/4.I/6.6, PA 5.T/5.I, PA 5.T/5.I/5.6, PA 5.T/5.I/6.6, PA 6.T/6.I/6.6, PA MXDA.6, PA IPDA.I, PA IPDA.T, PA MACM.I, PA MACM.T, PA PACM.I, PA PACM.T, PA MXDA.I, PA MXDA.T, PA 6.T/IPDA.T, PA 6.T/MACM.T, PA 6.T/PACM.T, PA 6.T/MXDA.T, PA 6.T/6.I/8.T/8.I, PA 6.T/6.I/10.T/10.I, PA 6.T/6.I/IPDA.T/IPDA.I, PA 6.T/6.I/MXDA.T/MXDA.I, PA 6.T/6.I/MACM.T/MACM.I, PA 6.T/6.I/PACM.T/PACM.I, PA 6.T/10.T/IPDA.T, PA 6.T/12.T/IPDA.T, PA 6.T/10.T/PACM.T, PA 6.T/12.T/PACM.T, PA 10.T/IPDA.T, PA 12.T/IPDA.T und Copolymeren und Gemischen davon.

7. Verfahren nach einem der vorhergehenden Ansprüche, wobei
- während einer ersten mittleren Verweilzeit t1 der wässrigen Lösung im Oligomerisierungsreaktor die Temperatur der Reaktionsmischung sich einer ersten Oligomerisierungstemperatur OT1 annähert oder diese erreicht und sich der Druck oder der Wasserdampfpartialdruck im Oligomerisierungsreaktor einem ersten Druck p1 annähert oder denselben beträgt, und
- sich anschließend während einer zweiten mittleren Verweilzeit t2 die Temperatur der wässrigen Lösung einer zweiten Oligomerisierungstemperatur OT2 annähert oder diese erreicht und sich der Druck oder der Wasserdampfpartialdruck im Oligomerisierungsreaktor einem zweiten Druck p2 annähert oder denselben beträgt.

8. Verfahren nach Anspruch 7, wobei die erste Verweilzeit t1 größer oder gleich der zweiten Verweilzeit t2 ist und die erste Oligomerisierungstemperatur OT1 kleiner oder gleich der zweiten Oligomerisierungstemperatur OT2 ist.

9. Verfahren nach Anspruch 7 oder 8, wobei der erste Druck p1 dem Sättigungsdampfdruck von Wasser bei der ersten Oligomerisierungstemperatur OT1 entspricht und der zweite Druck p2 unter dem Sättigungsdampfdruck von Wasser bei der zweiten Oligomerisierungstemperatur OT2 liegt.

10. Verfahren zur Herstellung eines teilkristallinen oder amorphen, thermoplastisch verarbeitbaren Polyamids, umfassend
- kontinuierliches Bereitstellen einer Mischung, die Wasser und ein Polyamid-Oligomer, herstellbar nach einem Verfahren gemäß einem der Ansprüche 1 bis 9, enthält, und
- Nachkondensation des Polyamid-Oligomers zu einem Polyamid.

11. Verfahren nach Anspruch 10, wobei das Polyamid-Oligomer bereitgestellt wird, indem es in einem Verfahren gemäß einem der Ansprüche 7 bis 9 hergestellt wird und aus dem Oligomerisationsreaktor mit der zweiten Oligomerisierungstemperatur OT2 und dem zweiten Druck p2 ausgetragen wird.

## Claims

1. Process for the continuous preparation of polyamide oligomers, comprising
- continuous feeding of an aqueous solution of polyamide-forming monomers from a storage vessel into an oligomerization reactor,
- Warming the aqueous solution above a dissolution or storage temperature beyond, wherein the residence time of the monomer solution in the oligomerization reactor is so
limited and the pressure or partial vapor pressure of the water so is set so that a conversion of monomers to polyamide oligomers a maximum value does not exceed and/or the resulting polyamide oligomers not phase-separate as a solid or spontaneously crystallize, and continuous discharge of the polyamide oligomers from the oligomerization ons reactor.

2. Method according to claim 1, wherein the polyamides, with exclusively hydrolytic Cleavage of the amide groups a composition of the following formula (I) result
A1a1IB1b1IA2a2IB2b2IB3b3IAXaxl BYbylABablA2Ba2b IAXBYaxby (I)
wherein
A1 denotes units derived from unsubstituted or substituted monocarboxylic acids or their derivatives,
A2 units denoting unsubstituted or substituted dicarboxylic acids or their derivatives,
AX denotes units derived from compounds with a carboxyl functionality greater than two,
B1 denotes units derived from monofunctional amines,
B2 denotes units derived from diamines,
B3 denotes units derived from triamines,
BY denotes units derived from compounds with an amino functionality greater than three,
AB denotes units derived from aminocarboxylic acids,
A2B denotes units derived from aminodicarboxylic acids,
AXBY denotes units derived from compounds with amino and carboxyl groups, where the functionalities X + Y are greater than 2,
with the proviso that the sum of all indices a1 + b1 + a2 + b2 + b3 + ax + by + ab + a2b + axby adds up to 100 mol%.

3. Process according to claim 1 or 2, wherein the polyamide-forming monomers are selected from
A) unsubstituted or substituted aromatic dicarboxylic acids and derivatives of unsubstituted or substituted aromatic dicarboxylic acids,
B) unsubstituted or substituted aromatic diamines,
C) aliphatic or cycloaliphatic dicarboxylic acids,
D) aliphatic or cycloaliphatic diamines,
E) monocarboxylic acids,
F) monoamines,
G) at least trivalent amines,
H) lactams,
I) ω-amino acids, and
K) compounds different from A) to I) that are co-condensable therewith, and mixtures thereof.

4. Process according to claim 3, wherein in step a) for providing the aqueous composition at least one of components A) or B) must be present.

5. Process according to either of claims 3 or 4, wherein the aromatic dicarboxylic acid A) used is terephthalic acid, isophthalic acid, or a mixture of terephthalic acid and isophthalic acid.

6. Process according to one of the preceding claims, wherein the polyamide is selected from PA 6.T, PA 9.T, PA 8.T, PA 10.T, PA 12.T,
PA 6.I, PA 8.I, PA 9.I, PA 10.I, PA 12.I, PA 6.T/6, PA 6.T/10, PA 6.T/12, PA 6.T/6.I,
PA 6.T/8.T, PA 6.T/9.T, PA 6.T/10T, PA 6.T/12.T, PA 12.T/6.T,
PA 6.T/6.I/6, PA 6.T/6.I/12, PA 6.T/6.I/6.10, PA 6.T/6.I/6.12, PA 6.T/6.6, PA 6.T/6.10,
PA 6.T/6.12, PA 10.T/6, PA 10.T/11, PA 10.T/12, PA 8.T/6.T, PA 8.T/66, PA 8.T/8.I,
PA 8.T/8.6, PA 8.T/6.I, PA 10.T/6.T, PA 10.T/6.6, PA 10.T/10.I, PA 10T/10.I/6.T, PA 10.T/6.I, PA 4.T/4.I/46, PA 4.T/4.I/6.6, PA 5.T/5.I, PA 5.T/5.I/5.6, PA 5.T/5.I/6.6, PA 6.T/6.I/6.6,
PA MXDA.6, PA IPDA.I, PA IPDA.T, PA MACM.I, PA MACM.T, PA PACM.I, PA PACM.T,
PA MXDA.I, PA MXDA.T, PA 6.T/IPDA.T, PA 6.T/MACM.T, PA 6.T/PACM.T, PA 6.T/MXDA.T, PA 6.T/6.I/8.T/8.I, PA 6.T/6.I/10.T/10.I,
PA 6.T/6.I/IPDA.T/IPDA.I, PA 6.T/6.I/MXDA.T/MXDA.I,
PA 6.T/6.I/MACM.T/MACM.I, PA 6.T/6.I/PACM.T/PACM.I, PA 6.T/10.T/IPDA.T,
PA 6.T/12.T/IPDA.T, PA 6.T/10.T/PACM.T, PA 6.T/12.T/PACM.T,
PA 10.T/IPDA.T, PA 12.T/IPDA.T and copolymers and mixtures thereof.

7. Method according to one of the preceding claims, wherein
- during a first mean residence time t1 of the aqueous solution in the oligomerization reactor the temperature of the reaction mixture approaches or reaches a first oligomerization temperature OT1 and the pressure or the water vapor partial pressure in the oligomerization reactor approaches or equals a first pressure p1 , and subsequently during a second mean residence time t2 the temperature of the aqueous solution approaches or reaches a second oligomerization temperature OT2 and the pressure or the water vapor partial pressure in the oligomerization reactor approaches or equals a second pressure p2.

8. Method according to claim 7, wherein the first residence time t1 is greater than or equal to the second residence time t2 and the first oligomerization temperature OT1 is less than or equal to the second oligomerization temperature OT2.

9. Method according to claim 7 or 8, wherein the first pressure p1 corresponds to the saturation vapor pressure of water at the first oligomerization temperature OT1 and the second pressure p2 is below the saturation vapor pressure of water at the second oligomerization temperature OT2.

10. Method for producing a partially crystalline or amorphous, thermoplastically processable polyamide, comprising
- continuously providing a mixture comprising water and a polyamide oligomer, producible by a method according to any one of claims 1 to 9, and
- post-condensation of the polyamide oligomer to form a polyamide.

11. Method according to claim 10, wherein the polyamide oligomer is provided by producing it In a method according to any one of claims 7 to 9 and discharging it from the oligomerization reactor at the second oligomerization temperature OT2 and the second pressure p2.

## Revendications

1. Procédé de fabrication continue d'oligomères de polyamide, comprenant
- alimentation continue d'une solution aqueuse de monomères formant du polyamide à partir d'un récipient de stockage dans un réacteur d'oligomérisation,
- Chauffer la solution aqueuse au-dessus d'une température de dissolution ou de stockage
au-delà, le temps de séjour de la solution de monomères dans le réacteur d'oligomérisation étant ainsi limité et la pression ou la pression partielle de vapeur de l'eau ainsi est réglé de sorte qu'une conversion de monomères en oligomères de polyamide un la valeur maximale n'est pas dépassée et/ou les oligomères de polyamide formés ne pas se séparer en phase solide ni cristalliser spontanément, et
- évacuation continue des oligomères de polyamide hors de l'oligomérionsreaktor.

2. Procédé selon la revendication 1, dans lequel les polyamides, lors d'une polymérisation exclusivement hydrolytique Scission des groupes amide une composition de la formule suivante
(I) donnent
A1a1IB1b1IA2a2IB2b2IB3b3IAXaxl BYbylABablA2Ba2b IAXBYaxby (I)
où
A1 désigne des unités dérivées de Mo-non substitués ou substitués acides monocarboxyliques ou de leurs dérivés,
A2 désigne des unités dérivées de di- non substitués ou substitués acides carboniques ou leurs dérivés,
AX désigne des unités dérivées de composés ayant une fonctionnalité carboxyle supérieure à deux,
B1 désigne des unités dérivées d'amines monofonctionnelles,
B2 désigne des unités dérivées de diamines,
B3 désigne des unités dérivées de triamines,
BY désigne des unités dérivées de composés ayant une fonctionnalité amino supérieure à trois,
AB désigne des unités dérivées d'aminoacides carboxyliques,
A2B désigne des unités dérivées d'aminodiacides carboxyliques,
AXBY désigne des unités dérivées de composés portant des groupes amino et carboxyle, les fonctionnalités X + Y étant supérieures à 2,
étant entendu que la somme de tous les indices a1 + b1 + a2 + b2 + b3 + ax + by + ab + a2b + axby est égale à 100 mol%.

3. Procédé selon la revendication 1 ou 2, dans lequel les monomères formant le polyamide sont choisis parmi les suivants
A) des acides dicarboxyliques aromatiques non substitués ou substitués et des déri-vés d'acides dicarboxyliques aromatiques non substitués ou substitués,
B) des diamines aromatiques non substituées ou substituées,
C) des acides dicarboxyliques aliphatiques ou cycloaliphatiques,
D) des diamines aliphatiques ou cycloaliphatiques,
E) Acides monocarboxyliques,
F) Monoamines,
G) des amines au moins trivalentes,
H) Lactamen,
I) w -Aminoacides, et
K) de composés différents de A) à I), cocondensables avec ceux-ci, et Des mélanges de ceux-ci.

4. Procédé selon la revendication 3, dans lequel à l'étape a) pour la préparation de l'aqueuse La composition doit contenir au moins l'un des composants A) ou B).

5. Procédé selon l'une des revendications 3 ou 4, dans lequel comme acide dicarboxylique aromatique A) Acide téréphtalique, acide isophtalique ou un mélange d'acide téréphtalique et d'acide isophtalique est utilisé.

6. Procédé selon l'une des revendications précédentes, dans lequel le polyamide est choisi Parmi parmi PA 6.T, PA 9.T, PA8.T, PA 10.T, PA 12.T,
PA 6.1, PA 8.1, PA 9.1, PA 10.1, PA 12.1, PA 6.T/6, PA 6.T/10, PA 6.T/12, PA 6.T/6.I,
PA6.T/8.T, PA 6.T/9.T, PA 6.T/10T, PA 6.T/12.T, PA 12.T/6.T,
PA 6.T/6.I/6, PA 6.T/6.I/12, PA 6.T/6.I/6.10, PA 6.T/6.I/6.12, PA 6.T/6.6, PA 6.T/6.10,
PA 6.T/6.12, PA 10.T/6, PA 10.T/11, PA 10.T/12, PA 8.T/6.T, PA 8.T/66, PA 8.T/8.I,
PA 8.T/8.6, PA 8.T/6.I, PA 10.T/6.T, PA 10.T/6.6, PA 10.T/10.I, PA 10T/10.l/6.T, PA 10.T/6.I, PA 4.T/4.I/46, PA 4.T/4.I/6.6, PA 5.T/5.I, PA 5.T/5.I/5.6, PA 5.T/5.I/6.6, PA 6.T/6.I/6.6,
PA MXDA.6, PA IPDA.I, PA IPDA.T, PA MACM.I, PA MACM.T, PA PACM.I, PA PACM.T,
PA MXDA.I, PA MXDA.T, PA 6.T/IPDA.T, PA 6.T/MACM.T, PA 6.T/PACM.T, PA 6.T/MXDA.T, PA 6.T/6.I/8.T/8.I, PA 6.T/6.I/10.T/10.I,
PA 6.T/6.I/IPDA.T/IPDA.I, PA 6.T/6.I/MXDA.T/MXDA.I,
PA 6.T/6.I/MACM.T/MACM.I, PA 6.T/6.I/PACM.T/PACM.I, PA 6.T/10.T/IPDA.T,
PA 6.T/12.T/IPDA.T, PA 6.T/10.T/PACM.T, PA 6.T/12.T/PACM.T,
PA 10.T/IPDA.T, PA 12.T/IPDA.T et leurs copolymères et mélanges.

7. Procédé selon l'une des revendications précédentes, dans lequel
- pendant un premier temps de séjour moyen t1 de la solution aqueuse dans le réacteur d'oligo-mérisation, la température du mélange réactionnel s'approche d'une première température d'oligomérisation OT1 ou l'atteint, et la pression ou la pression partielle de vapeur d'eau dans le réacteur d'oligomérisation s'approche d'une première pression p1 ou est égale à celle-ci, et
- ensuite, pendant un deuxième temps de séjour moyen t2, la température de la solution aqueuse s'approche d'une deuxième température d'oligomérisation OT2 ou l'atteint, et la pression ou la pression partielle de vapeur d'eau dans le réacteur d'oligomérisation s'approche d'une deuxième pression p2 ou est égale à celle-ci.

8. Procédé selon la revendication 7, dans lequel le premier temps de séjour t1 est supérieur ou égal au deuxième temps de séjour t2, et la première température d'oligomérisation OT1 est inférieure ou égale à la deuxième température d'oligomérisation OT2.

9. Procédé selon la revendication 7 ou 8, dans lequel la première pression p1 correspond à la pression de vapeur saturante de l'eau à la première température d'oligomérisation OT1 et la deuxième pression p2 est inférieure à la pression de vapeur saturante de l'eau à la deuxième température d'oligomérisation OT2.

10. Procédé de fabrication d'un polyamide partiellement cristallin ou amorphe, transformable thermoplastiquement, comprenant
- la fourniture continue d'un mélange contenant de l'eau et un oligomère de polyamide, pouvant être fabriqué selon un procédé conforme à l'une des revendications 1 à 9, et
- la postcondensation de l'oligomère de polyamide en un polyamide.

11. Procédé selon la revendication 10, dans lequel l'oligomère de polyamide est fourni en étant fabriqué dans un procédé conforme à l'une des revendications 7 à 9 et extrait du réacteur d'oligomérisation à la deuxième température d'oligomérisation OT2 et à la deuxième pression p2.
